(19) Europäisches Patentamt
European Patent Office
Office européen des brevets

(11) **EP 4 574 880 A1**

(12) # EUROPEAN PATENT APPLICATION


(43) Date of publication:
**25.06.2025 Bulletin 2025/26**

(21) Application number: **23218215.4**

(22) Date of filing: **19.12.2023**

(51) International Patent Classification (IPC):
***C08G 63/199*** *(2006.01)* ***C08L 83/10*** *(2006.01)*

(52) Cooperative Patent Classification (CPC):
(C-Sets available)
**C08G 63/199; C08L 83/10** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **SHPP Global Technologies B.V.**
**4612 PX Bergen op Zoom (NL)**

(72) Inventors:
- **SCHWARTZ, Erik**
  **4612 PX Bergen op Zoom (NL)**
- **VAN DE GRAMPEL, Robert Dirk**
  **4612 PX Bergen op Zoom (NL)**
- **TIKEKAR, Mukul**
  **4612 PX Bergen op Zoom (NL)**
- **VAN DER MEE, Mark Adrianus Johannes**
  **4612 PX Bergen op Zoom (NL)**
- **LUGGER, Jody Ann Martin**
  **4612 PX Bergen op Zoom (NL)**
- **STAM, Erik Jan**
  **4612 PX Bergen op Zoom (NL)**
- **MARREES, Robertus Johannes**
  **4612 PX Bergen op Zoom (NL)**
- **VAN ERP, Tim Bernardus**
  **4612 PX Bergen op Zoom (NL)**

(74) Representative: **Modiano, Gabriella Diana**
**Modiano & Partners SA**
**Steinsdorfstraße 14**
**80538 München (DE)**


(54) **GLASS-FILLED POLYMER RESIN COMPOSITIONS HAVING IMPROVED FATIGUE PERFORMANCE**


(57) Compositions include: (a) from about 55 wt% to about 89 wt% of a polycarbonate-polysiloxane copolymer; (b) from about 0.01 wt% to about 30 wt% of (i) a polycarbonate homopolymer or (ii) a cycloaliphatic polyester; and (c) from about 8 wt% to about 25 wt% of a reinforcing filler. A specimen including the composition and having a thickness of at least 2 millimeters (mm) exhibits a transmission of at least 80% as tested with a hazemeter in accordance with ISO 14782 and ISO 13468. Methods of forming the compositions are also described.


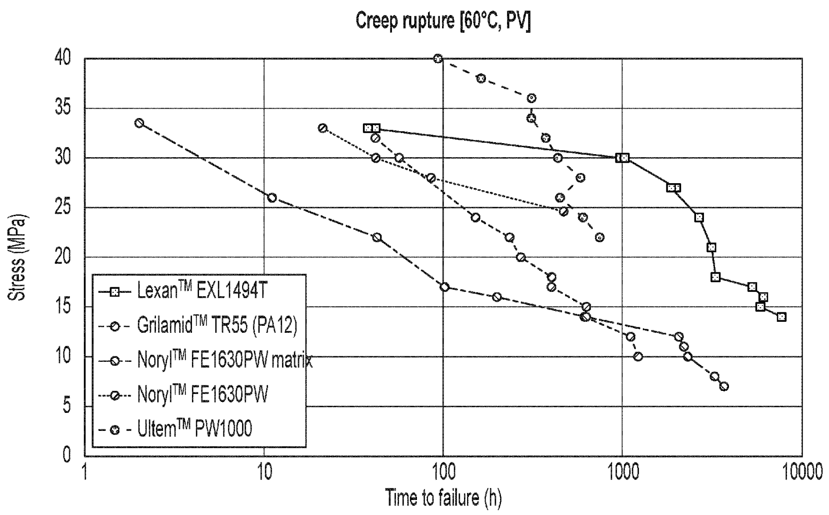


FIG. 1

EP 4 574 880 A1

(52) Cooperative Patent Classification (CPC): (Cont.)

C-Sets
**C08L 83/10, C08K 7/14, C08L 67/02;**
**C08L 83/10, C08K 7/14, C08L 69/00**

## Description

### FIELD OF THE DISCLOSURE

The present disclosure relates to polycarbonate compositions with improved fatigue performance and the articles including the compositions.

### BACKGROUND

Reinforced or filled polymer materials are useful in myriad applications given their desirable mechanical performance properties. Materials used in water-based applications generally further require these materials to have potable water certifications, sufficient transparency, good hydrolytic stability, and good long-term creep and fatigue resistance. Typically, materials used for such applications may include transparent polyamide or styrene acrylonitrile. These materials can generally only be used in thick parts so that the part can achieve desired fatigue resistance. Additionally, they have poor creep rupture performance, and articles including polyamide may have a yellow tinge which can be undesirable in certain applications.

There remains a need in the art for sufficiently transparent materials with excellent hydrolytic stability while also maintaining long-term creep and/or fatigue resistance, particularly for water-based applications.

These and other shortcomings are addressed by aspects of the present disclosure.

### SUMMARY

The above-described and other deficiencies of the art are met by thermoplastic compositions including: from about 55 wt% to about 89 wt% of a polycarbonate-polysiloxane copolymer; from about 0.01 wt% to about 30 wt% of a polycarbonate homopolymer or a cycloaliphatic polyester; from about 8 wt% to about 25 wt% of a reinforcing filler. The combined weight percent value of all components does not exceed 100 wt%, and all weight percent values are based on the total weight of the composition. A specimen including the composition and having a thickness of at least 1 millimeter (mm) exhibits a transmission of at least 80% as tested with a hazemeter in accordance with ISO 14782 and ISO 13468.

The above described and other features are exemplified by the following detailed description, examples, and claims.

### BRIEF DESCRIPTION

The accompanying figures, which are incorporated in and constitute a part of this specification, illustrate several aspects and together with the description service to explain the principles of the of the disclosure.

FIG. 1 is a graphical representation of creep performance for several commercial polymer grades.
FIG. 2 is a graphical representation of fatigue performance for several commercial polymer grades.
FIG. 3 presents Table 1 showing the materials used for formulations in the present disclosure.
FIG. 4 presents Table 2 showing the temperature profiles for compounding used for compositions of the present disclosure.
FIG. 5 presents Table 3 showing the injection molding profile for forming samples used for compositions of the present disclosure.
FIG. 6 presents Table 4 showing the formulations CE1 and E2 through E8 and observed performance thereof.
FIG. 7 presents Table 5 showing fatigue test parameters used for testing the compositions of the present disclosure.
FIG. 8 presents Table 6 showing the fatigue, transmission, and haze testing properties of the compositions of Table 4.
FIG. 9 is a graphical representation of tensile fatigue for compositions CE1, E2 through E8, and PA12 at room temperature/44 MPa and 60 °C/37.8 MPa.
FIG. 10 shows images for visual haze assessment for compositions of Table 4.
FIG. 11A presents Table 7 showing the compositions E9 through E21.
FIG. 11B is a continuation of Table 7 showing properties of the compositions of Table 7 (FIG. 11A).
FIG. 12 presents Table 8 showing fatigue and creep performance for compositions E10 and E20.
FIG. 13 is a graphical representation of tensile fatigue for compositions CE1, PA12, E8, E10, and E20 at room temperature/44 MPa and 60 °C/37.8 MPa

### DETAILED DESCRIPTION OF ILLUSTRATIVE ASPECTS

The present disclosure may be understood more readily by reference to the following detailed description of

desired aspects and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, computer, antenna and lighting articles.

Reinforced or filled polymer materials are useful in myriad applications given their desirable mechanical performance properties. Materials used in water-based applications, such as transparent housings or filters for water management, generally further require these materials have potable water certifications, sufficient transparency for inspecting within a given housing or filter, good hydrolytic stability upon exposure to water or moisture, and good long-term creep, and long-term fatigue resistance to allow for long-term or prolonged use to withstand pressure fluctuations for a long time without cracking . Conventional approaches to improve fatigue often include adjustments to the resin molecular weight or the addition of reinforcing fibers. These approaches however may result in either a decrease in transparency because of the increase of fibers or a change in the melt flow rate that inhibits molding Processes - which would be necessary to form the composition in the materials for water-based applications.

There have been attempts to achieve compositions with sufficient fatigue performance. Published European Application EP1966310A1 discloses combinations of polycarbonate, polysiloxane copolymer, and styrene acrylonitrile copolymer. The disclosed compositions however are unfilled. Other research has focused on transparency performance. Published European Application EP1966310A1 discloses polycarbonate compositions combining polycarbonate with polycarbonate-polyorganosiloxane copolymer, and glass fiber but the implication of the combined elements on creep and/or fatigue are not addressed. Korean published application KR20170092143A describes formulations including polycarbonate resin, polycarbonate-polysiloxane copolymer, aromatic copolyester, and glass fiber. U.S. Published Patent Application US20070293608A1 discloses compositions including opaque polycarbonate-polysiloxane copolymer and polycarbonate homopolymer and are generally not glass fiber-filled. The compositions exhibit improved fatigue but likely lack transparency/adequate transmission. The disclosures of these publications are incorporated by this reference herein in their entirety.

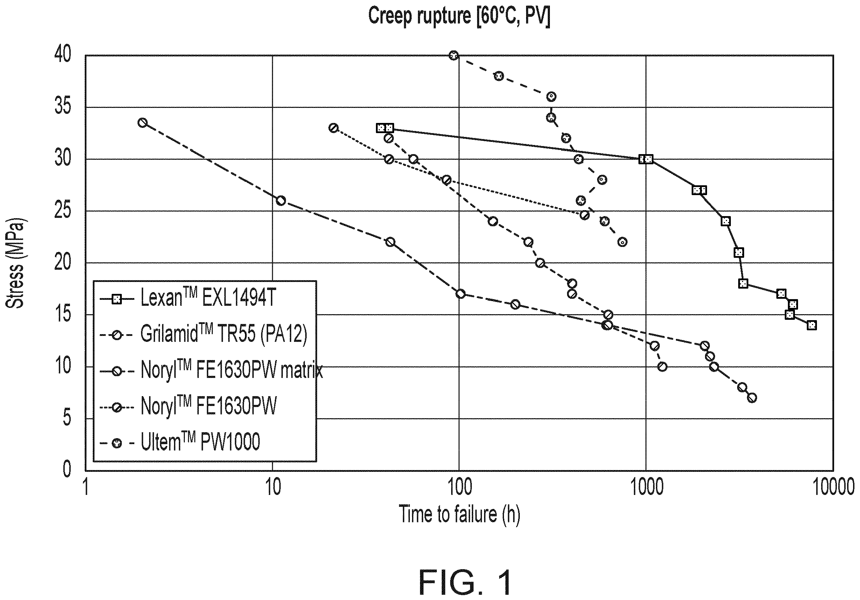

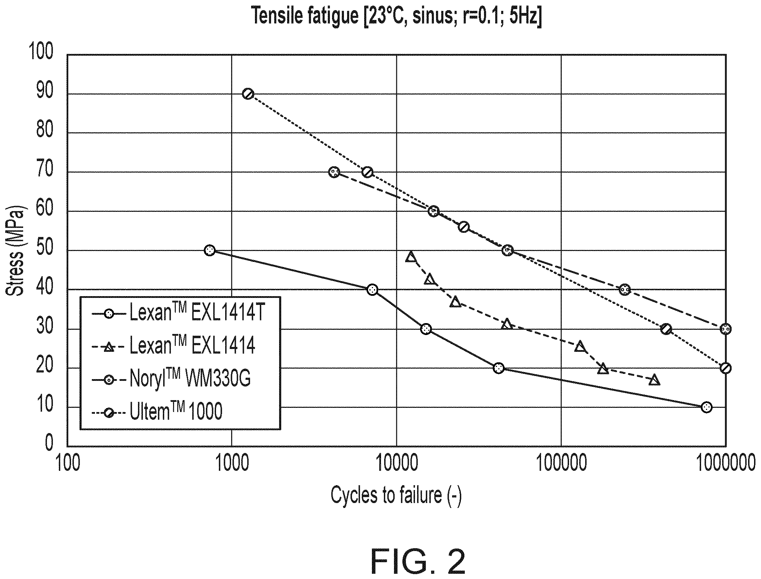

Commercially available resins also exhibit certain limited creep and fatigue performance. Commercially available EXL grades are polycarbonate-polysiloxane based copolymer and can be transparent. The materials may be considered for the above-mentioned applications as the materials have good creep rupture performance, including at cold water temperatures, as shown in FIG. 1 and decent transparency. However, these materials exhibit poor fatigue performance as shown in FIG. 2. Fatigue resistance was measured on injection-molded tensile bars using an Instron ElectroPuls E10000 dynamic testing instrument for the formulations as indicated in Table 4.

Aspects of the present disclosure may resolve many of the above-described technical limitations and resolve the shortcomings of existing transparent fatigue materials. Compositions of the present disclosure may provide sufficiently transparent materials with excellent hydrolytic stability while also maintaining long-term creep and/or fatigue resistance, particularly for water-based applications. The disclosed compositions provide glass-filled polycarbonate-siloxane copolymer compositions. The disclosed formulations include a sufficiently high loading of glass fiber to polycarbonate-polysiloxane copolymer resin with polycarbonate homopolymer and/or a cycloaliphatic polyester to provide the composition with desirable transparency, mechanical performance, and creep and/or fatigue performance.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of aspects described in the specification.

***Thermoplastic Compositions***

The disclosed compositions may include a polycarbonate-polysiloxane copolymer, one or more of a polycarbonate homopolymer or a cycloaliphatic polyester, and a reinforcing filler. Accordingly, the composition may include a mixture of polycarbonate copolymers and polycarbonate homopolymer.

In certain aspects, the composition includes a polycarbonate copolymer such as a polycarbonate-polysiloxane

copolymer combined with a polycarbonate homopolymer or a cycloaliphatic polyester. As an example, the composition may include from about 55 wt% to about 89 wt% of a polycarbonate-polysiloxane copolymer; from about 0.01 wt% to about 30 wt% of (i) a polycarbonate homopolymer or (ii) a cycloaliphatic polyester; and from about 8 wt% to about 25 wt% of a reinforcing filler. The combined weight percent value of all components does not exceed 100 wt% and all weight percent values are based on the total weight of the composition.

Compositions according to aspects of the disclosure have improved properties as compared to unfilled copolymer resins, or copolymer resins in the absence of the polycarbonate homopolymer or cycloaliphatic polyester. The specific combination of polycarbonate-polysiloxane copolymer, reinforcing filler, and polycarbonate homopolymer or cycloaliphatic polyester in the disclosed amounts may achieve certain improved performance with respect to transmission, haze, and fatigue when compared to a reference composition in the absence of polycarbonate homopolymer, or polycarbonate copolyester, or reinforcing filler. More specifically, a specimen including the composition and having a thickness of at least 1 mm exhibits a transmission of at least 80% as tested with a hazemeter in accordance with ISO 14782 and ISO 13468. In yet further aspects, the disclosed composition achieves at least 5,000 cycles or at least 10,000 cycles to failure when observed in a fatigue test on injection molded tensile bars of the composition at room temperature using a dynamic testing instrument at a stress of 37.8 MPa.

The polycarbonate homopolymer may be derived from bisphenol A units.

The cycloaliphatic polyester may include a poly(1,4-cyclohexylenedimethylene 1,4-cyclohexanedicarboxylate) (PCCD) polyester.

In some aspects, the reinforcing filler may include a glass fiber, such as a flat glass fiber.

***Polycarbonate-Polysiloxane Copolymer***

In various aspects, the disclosed compositions include at least one polycarbonate-polysiloxane copolymer. As used herein, the term "polycarbonate-polysiloxane copolymer" is equivalent to polysiloxane-polycarbonate copolymer, polycarbonate polysiloxane polymer, or polysiloxane polycarbonate polymer. In various aspects, the polycarbonate-polysiloxane copolymer can be a block copolymer including one or more polycarbonate blocks and one or more polysiloxane blocks. The polysiloxane-polycarbonate copolymer includes polydiorganosiloxane blocks including structural units of the general formula (1) below:

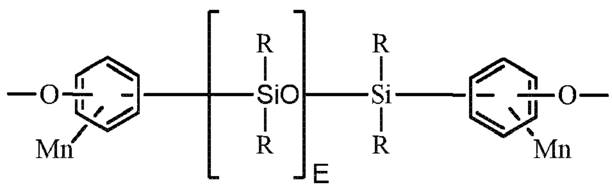
(1)

wherein the polydiorganosiloxane block length (E) is about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$- $C_{12}$aralkoxy, $C_7$- $C_{12}$ alkylaryl, or $C_7$-$C_{12}$ alkylaryloxy, and where each n is independently 0, 1, 2, 3, or 4.

The polysiloxane-polycarbonate copolymer also includes polycarbonate blocks including structural units of the general formula (2) below:

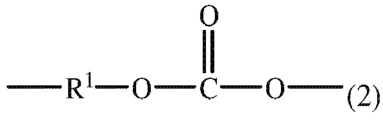
(2)

wherein at least 60 percent of the total number of $R^1$ groups include aromatic moieties and the balance thereof include aliphatic, alicyclic, or aromatic moieties. Polysiloxane-polycarbonates materials include materials disclosed and described in U.S. Patent No. 7,786,246, which is hereby incorporated by reference in its entirety for the specific purpose of disclosing various compositions and methods for manufacture of same.

Non-limiting examples of polysiloxane-polycarbonate copolymers may include various copolymers available from SABIC™. As used herein, the term polycarbonate-siloxane copolymer may refer to LEXAN™ EXL-polycarbonate resin or LEXAN™ resin (commercially available from SABIC™) according to the content of siloxane in the polycarbonate-polysiloxane copolymer.

Polycarbonate-polysiloxane copolymers may be useful polycarbonate copolymers and may include 30 wt% to 99

wt% of carbonate units and 1 wt% to 70 wt% siloxane units. Within this range, in some aspects, the polyorganosiloxane-polycarbonate copolymer can include 70 wt% to 98 wt%, more specifically 75 wt% to 97 wt% of carbonate units and 2 wt% to 30 wt%, more specifically 3 wt% to 25 wt% siloxane units. Within this range, in other aspects, the polyorganosiloxane-polycarbonate copolymer can include 30 wt% to 70 wt%, more specifically 35 wt% to 65 wt% of carbonate units and 30 wt% to 70 wt%, more specifically 35 wt% to 65 wt% siloxane units.

Polycarbonate-polysiloxane copolymers may have a weight average molecular weight of 2,000 Daltons to 100,000 Daltons, specifically 5,000 to 50,000 Daltons as measured by gel permeation chromatography using a cross-linked styrene-divinyl benzene column, at a sample concentration of 1 milligram per milliliter, and as calibrated with polycarbonate standards.

In some aspects, the composition includes a polysiloxane-polycarbonate copolymer having a siloxane content of from about 0.5 wt% to about 30 wt%. In one example, the polycarbonate composition may include a polycarbonate-polysiloxane copolymer having 6 wt% polysiloxane content based upon the total weight of the polysiloxane-polycarbonate copolymer. In various aspects, the 6 wt% polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6 wt% siloxane polysiloxane-polycarbonate copolymer can have a melt volume flow rate (MVR) of about 10 $cm^3$/10 min at 300 °C /1.2 kg (see C9030T, a 6 wt% polysiloxane content copolymer available from SABIC™ as "transparent" EXL C9030T resin polymer). In another example, the polysiloxane-polycarbonate block can include 20 wt% polysiloxane based upon the total weight of the polysiloxane block copolymer. In a further example, an additional appropriate polysiloxane-polycarbonate copolymer may be a bisphenol A polysiloxane-polycarbonate copolymer end-capped with para-cumyl phenol (PCP) and having a 20 wt% polysiloxane content (commercially available from SABIC as the "opaque" EXL or C9030P). In various aspects, the weight average molecular weight of the 20 wt% polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20 wt% polysiloxane block copolymer can have a melt volume rate (MVR) at 300 °C/1.2 kg of 7 $cm^3$/10 min and can exhibit siloxane domains sized in a range of from about 5 micrometers to about 20 micrometers (microns, $\mu$m).

In further examples, the polycarbonate-polysiloxane copolymer has a siloxane content of from about 30 wt% to 70 wt%. The disclosed polycarbonate-polysiloxane copolymer having a siloxane content of from about 30 wt% to 70 wt% may have a weight average molecular weight of 26,000 to 50,000 grams per mole, as determined by gel permeation chromatography using polystyrene standards and calculated for polycarbonate. In yet further examples, the polycarbonate-polysiloxane copolymer having a siloxane content of from 30 wt% to 70 wt% has a weight average molecular weight of 30,000 to 45,000 grams per mole, as determined by gel permeation chromatography using polystyrene standards and calculated for polycarbonate. As an example, the polycarbonate composition may include a polycarbonate-polysiloxane copolymer having 40 wt% polysiloxane content based upon the total weight of the polysiloxane-polycarbonate copolymer. In various aspects, the 40 wt% polysiloxane block copolymer may have a weight average molecular weight (Mw) of from about 26,000 to 50,000 g/mol as determined by gel permeation chromatography using polystyrene standards and calculated for polycarbonate. The polysiloxane-polycarbonate copolymer may have a molecular weight of at least 20/000 g/mol when determined by gel permeation chromatography based on a polycarbonate standard.

Representative polycarbonate-siloxane copolymers include those exemplified within this specification. In some aspects, two or more polycarbonate-siloxane copolymers may be used. For example, in some aspects, blends of end-capped and hydroxy terminated materials may be used. In other aspects, blends of similar chemistries having different proportions of siloxane may also be used. The disclosed polycarbonate-siloxane copolymer block copolymers can also be end-capped. For example, according to aspects of the disclosure, a polycarbonate-siloxane copolymer block copolymer can be end capped with p-cumyl-phenol.

The polycarbonate-polysiloxane polymers may have a melt volume flow rate, measured at 300 °C/1.2 kg, of 1 to 50 cubic centimeters per 10 minutes ($cm^3$/10 min), specifically 2 to 30 $cm^3$/10 min. Mixtures of polyorganosiloxane-polycarbonates of different flow properties can be used to achieve the overall desired flow property.

In some aspects, the polymer composition may include from about 55 wt% to about 89 wt% of at least one polycarbonate-polysiloxane copolymer. Within this range, the polycarbonate copolymer may be present in an amount of 55 wt% to 80 wt%, 65 wt% to 89 wt%, 60 wt% to 89 wt%, 65 wt% to 85 wt%, 67 wt% to 88 wt%, 54 wt% to 88 wt%, 55 wt% to 90 wt%, or 60 wt% to 90 wt%, based on the total weight of the composition. In specific aspects the composition includes a plurality (e.g., at least 2) polycarbonate-polysiloxane copolymers having the characteristics described herein.

***Polycarbonate Homopolymer***

As used herein, polycarbonate refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates. As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification. In certain aspects the polycarbonate polymer is a Bisphenol-A polycarbonate.

Polycarbonate may define any polycarbonate material or mixture of materials, for example, as recited in U.S. Patent No. 7,786,246, which is hereby incorporated in its entirety for the specific purpose of disclosing various polycarbonate compositions and methods. The term polycarbonate can be further defined as compositions having repeating structural units of the formula (1):

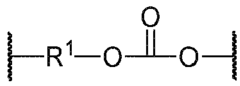 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O)-, -S($O_2$)-, -C(O) -, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In various further aspects, "polycarbonates" and "polycarbonate resins" as used herein further defines homopolycarbonates (referred to herein as "polycarbonate homopolymers," having the same $R^1$), copolymers including different $R^1$ moieties in the carbonate (referred to herein as "copolycarbonates" or "polycarbonate copolymers"), copolymers including carbonate units and other types of polymer units, such as ester units, polysiloxane units, and combinations including at least one of polycarbonate homopolymers and polycarbonates copolymers. As used herein, "combination" is inclusive of blends, mixtures, alloys, reaction products, and the like. The disclosed composition may include a polycarbonate homopolymer.

In specific aspects, the disclosed polycarbonate composition includes from about 0.01 wt% to about 30 wt% of a polycarbonate homopolymer or a cycloaliphatic polyester. For example, the composition may include from about 0.01 wt% to about 30 wt% of a polycarbonate homopolymer or from about 0.1 wt% to 20 wt%, 0.15 wt% to 15 wt%, 0.5 wt% to 18 wt%, 0.8 wt% to 12 wt%, 1 wt% to 18 wt%, 5 wt% to 18 wt%, 3 wt% to 15 wt%, or 0.15 wt% to 15 wt%, based on the total weight of the composition. In one example, the polycarbonate homopolymer is present in an amount of 0.01 wt% to 10 wt%.

According to various aspects, the composition m may include a mixture of polycarbonate homopolymers. The polycarbonate component may include a polycarbonate homopolymer having a weight average molecular weight of at least 20,000 grams per mole (g/mol) as determined by gel permeation chromatography (GPC) using polystyrene standards and calculated for polycarbonate. For example, the polycarbonate homopolymer may have a weight average molecular weight of 20,000 grams per mole to 35,000 grams per mole. In yet further examples, the disclosed composition may include a polycarbonate homopolymer having a weight average molecular weight of 19,000 to 25,000 grams per mole, as determined by gel permeation chromatography using polystyrene standards and calculated for polycarbonate. In further aspects, the composition may include a polycarbonate homopolymer having a weight average molecular weight of 28,000 to 32,000 grams per mole, as determined by gel permeation chromatography using polystyrene standards and calculated for polycarbonate; or a combination thereof.

The terms "BisA," "BPA," or "bisphenol A," which can be used interchangeably, as used herein refers to a compound having a structure represented by formula (C):

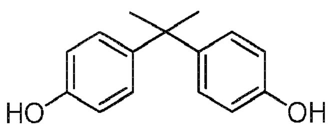 (C)

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In addition to the polycarbonates described above, combinations of the polycarbonate with other thermoplastic polymers, for example combinations of homopolycarbonates, copolycarbonates, and polycarbonate copolymers with polyesters, can be used. For example, useful polyesters include, but are not limited to, poly(alkylene dicarboxylates), liquid crystalline polyesters, and polyester copolymers as described herein. The polyesters described herein can generally be completely miscible with the polycarbonates when blended.

In some aspects, the polymer composition may include from about 55 wt% to about 89 wt% of the polycarbonate-polysiloxane copolymer. Within this range, the polycarbonate copolymer may be present in an amount of 0.1 wt% to 20 wt%, 0.15 wt% to 20 wt%, 0.5 wt% to 20 wt%, 0.8 wt% to 20 wt%, 1 wt% to 20 wt%, 0.1 wt% to 18 wt%, 0.5 wt% to 15 wt%, or 0.15 wt% to 15 wt%, based on the total weight of the composition.

***Cycloaliphatic Polyester***

In various aspects, the disclosed compositions may include a polyester, such as a cycloaliphatic polyester. In some aspects, the composition may include a polyester copolymer such as a polyester-polycarbonate copolymer. As further described herein, polyesters have repeating units of the following formula (A):

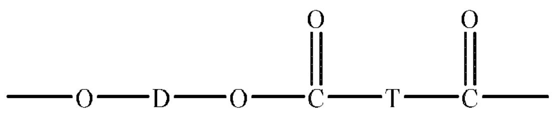

(A)

wherein T is a residue derived from a terephthalic acid or chemical equivalent thereof, and D is a residue derived from polymerization of an ethylene glycol, butylene diol, specifically 1,4-butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions.

In various aspects, the polyester may be a condensation product where D is the residue of an aryl, alkane or cycloalkane containing diol having 6 to 20 carbon atoms or chemical equivalent thereof, and T is the decarboxylated residue derived from an aryl, aliphatic or cycloalkane containing diacid of 6 to 20 carbon atoms or chemical equivalent thereof with the proviso that at least one D or T is cycloaliphatic. In specific examples of the present disclosure, both D and T may be cycloaliphatic.

Cycloaliphatic polyesters described herein may be condensation products of aliphatic diacids, or chemical equivalents and aliphatic diols, or chemical equivalents. The present cycloaliphatic polyesters may be formed from mixtures of aliphatic diacids and aliphatic diols but must contain at least 50 mole % of cyclic diacid and/or cyclic diol components, the remainder, if any, being linear aliphatic diacids and/or diols. Without wishing to be bound by any particular theory, cyclic components may be necessary to impart good rigidity to the polyester and to allow the formation of transparent blends due to favorable interaction with the polycarbonate resin.

In a specific example, the cycloaliphatic T may be derived from the 1,4-cyclohexyl diacids and greater than 70 mole % thereof may be in the form of the trans isomer. The cycloaliphatic radical D may be derived from the 1,4-cyclohexyl primary diols such as 1,4-cyclohexyl dimethanol, most preferably more than 70 mole % thereof in the form of the trans isomer. Other diols useful in the preparation of the polyester resins of the present disclosure are straight chain, branched, or cycloaliphatic alkane diols and may contain from 2 to 12 carbon atoms. Examples of such diols include but are not limited to ethylene glycol; propylene glycol, i.e.,1,2- and 1,3-propylene glycol; 2,2-dimethyl-1,3-propane diol; 2-ethyl, 2-methyl, 1,3-propane diol; 1,3- and 1,5-pentane diol; dipropylene glycol; 2-methyl-1,5-pentane diol; 1,6-hexane diol; dimethanol decalin, dimethanol bicyclo octane; 1,4-cyclohexane dimethanol and particularly its cis- and trans-isomers; 2,2,4,4-tetramethyl-1,3-cyclobutanediol (TMCBD), triethylene glycol; 1,10-decane diol; and mixtures of any of the foregoing. Preferably a cycloaliphatic diol or chemical equivalent thereof and particularly 1,4-cyclohexane dimethanol or its chemical equivalents are used as the diol component.

An example of a cycloaliphatic polyester according to aspects of the present disclosure is poly(cyclohexane-1,4-dimethylene cyclohexane-1,4-dicarboxylate) also referred to as poly(1,4-cyclohexane-dimethanol-1,4-dicarboxylate) (PCCD) which has recurring units of formula II:

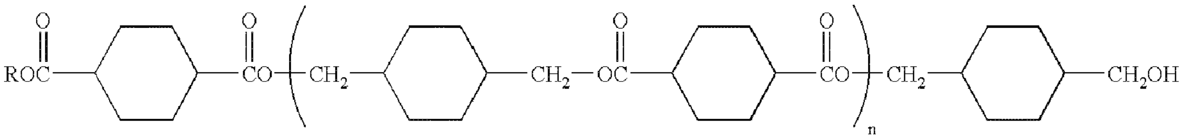

With reference to the previously set forth general formula, for PCCD, D is derived from 1,4 cyclohexane dimethanol; and T is a cyclohexane ring derived from cyclohexanedicarboxylate or a chemical equivalent thereof. A favorable PCCD may have a cis/trans formula.

According to various aspects, suitable aliphatic polyesters used in the present compositions may have a glass transition temperature (Tg) which is above 50 °C, or above 80 °C, or above 100 °C.

Suitable cycloaliphatic polyesters are described in U.S. Published Patent Application 2003/0032725, the disclosure of which is incorporated herein by this reference in its entirety.

Also contemplated herein are the above polyesters with from about 1 to about 50 percent by weight, of units derived from polymeric aliphatic acids and/or polymeric aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

In another aspect, the compositions of the present disclosure can include polyesters including, for example, aromatic polyesters, poly(alkylene esters) including poly(alkylene arylates), and poly(cycloalkylene diesters). Aromatic polyesters can have a polyester structure according to formula (A), wherein D and T are each aromatic groups as described hereinabove. In an aspect, useful aromatic polyesters can include, for example, poly(isophthalate-terephthalate-resorcinol)esters, poly(isophthalate-terephthalate-bisphenol A)esters, poly[(isophthalate-terephthalate-resorcinol)ester-co-(isophthalate-terephthalate-bisphenol A)]ester, or a combination including at least one of these. Also contemplated are aromatic polyesters with a minor amount, e.g., about 0.5 to about 10 wt%, based on the total weight of the polyester, of units derived from an aliphatic diacid and/or an aliphatic polyol to make copolyesters. Poly(alkylene arylates) can have a polyester structure according to formula (A), wherein T includes groups derived from aromatic dicarboxylates, cycloaliphatic dicarboxylic acids, or derivatives thereof.

Examples of specifically useful T groups include, but are not limited to, 1,2-, 1,3-, and 1,4-phenylene; 1,4- and 1,5-naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters can also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer includes greater than 50 mol % of poly(1,4-cyclohexanedimethylene terephthalate).

Poly(cycloalkylene diester)s can also include poly(alkylene cyclohexanedicarboxylate)s. Of these, a specific example is PCCD described above.

In specific aspects, the composition includes from about 0.01 wt% to about 30 wt% of the cycloaliphatic polyester. For example, the composition may include from about 0.1 wt% to about 30 wt%, or from about 0.5 wt% to about 30 wt%, or from about 1.0 wt% to about 30 wt%, or from about 2 wt% to about 30 wt%, or from about 3 wt% to about 30 wt%, or from about 5 wt% to about 30 wt%, or from about 10 wt% to about 30 wt%, or from about 15 wt% to about 30 wt%, or from about 18 wt% to about 30 wt%, or from 0.01 wt% to about 29 wt%, or from 0.01 wt% to about 28 wt%, or from 0.01 wt% to about 27 wt%, or from 0.01 wt% to about 26 wt%, or from 0.01 wt% to about 25 wt%, or from 0.01 wt% to about 24 wt%, or from 0.01 wt% to about 23 wt%, or from 0.01 wt% to about 22 wt%, or from 0.01 wt% to about 21 wt%, or from 0.01 wt% to about 20 wt%, of the cycloaliphatic polyester.

### *Reinforcing Filler*

The compositions of the present disclosure can include a reinforcing filler. Exemplary reinforcing fillers can include glass fiber, carbon fiber, a mineral filler, or a combination thereof. For example, the reinforcing filler can include mica, clay, feldspar, quartz, quartzite, perlite, tripoli, diatomaceous earth, aluminum silicate (mullite), synthetic calcium

silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, $TiO_2$, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations including at least one of the foregoing fillers or reinforcing agents.

The fillers and reinforcing agents may be surface treated to deliver certain properties or to increase compatibility with the composition. Generally, a metallic material may be coated upon the filler to facilitate conductivity, or a silane may be deposited on the filler surface to improve adhesion and dispersion with the polymer matrix. Thus in one example, the filler can include glass fibers coated with silanes.

In various aspects of the present disclosure, the reinforcing filler includes a glass fiber. The glass fiber can also be surface-treated with a surface treatment agent containing a coupling agent. Appropriate coupling agents can include, but are not limited to, silane-based coupling agents, titanate -based coupling agents or a mixture thereof. Suitable silane-based coupling agents can include aminosilane, epoxysilane, amidesilane, azidesilane and acrylsilane. In one aspect, the disclosed thermoplastic compositions include a glass fiber component. In a further aspect, the glass fiber included in the glass fiber component is selected from E-glass, S-glass, AR-glass, T-glass, D-glass and R-glass. In a still further aspect, the glass fiber is selected from E-glass, S-glass, and combinations thereof. In a still further aspect, the glass fiber is one or more S-glass materials. High-strength glass is generally known as S-type glass in the United States, R-glass in Europe and T-glass in Japan. S-glass was originally developed for military applications in the 1960s, and a lower cost version, S-2 glass, was later developed for commercial applications. High-strength glass has appreciably higher amounts of silica oxide, aluminum oxide and magnesium oxide than E-glass. S-2 glass is approximately 40-70% stronger than E-glass. The glass fibers can be made by standard processes, e.g., by steam or air blowing, flame blowing, and mechanical pulling. Exemplary glass fibers for thermoplastic compositions of the present disclosure may be made by mechanical pulling.

The glass fibers may be sized or unsized. Sized glass fibers are coated on their surfaces with a sizing composition selected for compatibility with the polymeric base resin. The sizing composition facilitates wet-out and wet-through of the polymeric base resin upon the fiber strands and assists in attaining desired physical properties in the thermoplastic composition.

In various further aspects, the glass fiber is sized with a coating agent. In a further aspect, the coating agent is present in an amount from 0.1 wt% to 5 wt%, or from about 0.1 wt% to about 5 wt% based on the weight of the glass fibers. In a still further aspect, the coating agent is present in an amount from about 0.1 wt% to about 2 wt% based on the weight of the glass fibers.

In preparing the glass fibers, a number of filaments can be formed simultaneously, sized with the coating agent and then bundled into what is called a strand. Alternatively the strand itself may be first formed of filaments and then sized. The amount of sizing employed is generally that amount which is sufficient to bind the glass filaments into a continuous strand and ranges from 0.1 wt% to 5 wt%, or from about 0.1 to about 5 wt%, from 0.1 wt% to 2 wt% or from about 0.1 to 2 wt% based on the weight of the glass fibers. Generally, this may be 1.0 wt% or about 1.0 wt% based on the weight of the glass filament.

In a further aspect, the glass fiber can be continuous or chopped. In a still further aspect, the glass fiber is continuous. In yet a further aspect, the glass fiber is chopped. Glass fibers in the form of chopped strands may have a length of 0.3 millimeter (mm) to 10 centimeters (cm) or about 0.3 mm to about 10 cm, specifically 0.5 millimeter (mm) to 5 cm or about 0.5 mm to about 5 cm, and more specifically 1 mm to 2.5 cm, or about 1.0 millimeter to about 2.5 centimeters. In various further aspects, the glass fiber has a length from 0.2 mm to 20 mm or about 0.2 mm to about 20 mm. In a yet further aspect, the glass fiber has a length from 0.2 mm to 10 mm, or from about 0.2 mm to about 10 mm. In an even further aspect, the glass fiber has a length from 0.7 mm to 7 mm, or from about 0.7 mm to about 7 mm. In this area, where a thermoplastic resin is reinforced with glass fibers in a composite form, fibers having a length of 0.4 mm or about 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from 1 micrometer (micron, $\mu$m) to 15 $\mu$m, or from about 1 $\mu$m to about 15 $\mu$m. In an even further aspect, the diameter of the glass fiber is from 4 $\mu$m to 10 $\mu$m or from about 4 $\mu$m to about 10 $\mu$m. In a still further aspect, the diameter of the glass fiber is from 1 $\mu$m to 10 $\mu$m or from about 1 to about 10 $\mu$m. In a still further aspect, the glass fiber has a diameter from 7 $\mu$m to 10 $\mu$m or from about 7 $\mu$m to about 10 $\mu$m.

As provided above, glass fiber having a flat cross-section may be used. A flat glass fiber may have an aspect ratio for the flat cross-section of 2 to 5 or from about 2 to about 5. For example, the flat cross-section glass may have a flat ratio of 4:1.

One purely exemplary glass fiber suitable for use in the glass fiber component in an aspect of the disclosure is an E-glass fiber ECS303H, available from Chongqing Polycomp International Corp.

The glass fiber can have a round or flat cross section, or some combination thereof. As such, the composition may include both glass fibers with round cross sections and glass fibers with flat cross sections. For example, the glass fiber can have a round cross section with a diameter of from 10 micrometers (μm) to 20 μm, or from about 10 μm to about 20 μm. In an example, the glass fiber can have a diameter of 13 μm, or about 13 μm. In further aspects, the glass fibers can have a pre-compounded length of from 0.1 millimeters (mm) to 20 mm, or from about 0.1 mm to about 20 mm. As an example, the glass fibers can have a pre-compounded length of 4 millimeters (mm), or about 4 mm. In some aspects of the disclosed composition, the glass fibers can have a length of 2 mm or longer, or about 2 mm or longer.

In certain examples, the resin composition disclosed herein includes from 8 wt% to 25 wt%, or from about 0.1 wt% to about 22 wt% of the reinforcing filler. In other examples, the composite includes from 5 wt% to 25 wt% of the reinforcing filler, or from 7 wt% to 22 wt% of the reinforcing filler, the resin composite includes from about 7 wt% to about 25 wt% of the reinforcing filler, or from about 8 wt% to about 22 wt% of the reinforcing filler.

In yet further examples, the composition disclosed herein includes from 8 wt% to 25 wt%, or from about 5 wt% to about 25 wt% of a glass fiber, such as a flat glass fiber. In other examples, the composition includes from 8 wt% to 22 wt% of the glass fiber, or from 9 wt% to 21 wt% of the glass fiber, the composition includes from about 7 wt% to about 25 wt% of the glass fiber, or from about 8 wt% to about 21 wt% of the glass fiber.

***Additives***

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition. Suitable additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

According to certain aspects, the polymer compositions may maintain mechanical performance and dielectric strength even with high levels of fillers (for example, greater than 30 wt% filler based on the total weight of the polymer composition).

The composition disclosed herein can include one or more additional fillers. The filler can be selected to impart additional impact strength and/or provide additional characteristics that can be based on the final selected characteristics of the polymer composition. In certain aspects, the composite may include a glass fiber filler.

Additional appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations including at least one of the foregoing fillers or reinforcing agents. The fillers and reinforcing agents can be coated, or surface treated, with silanes for example, to improve adhesion and dispersion with the polymer matrix.

In specific aspects, the additive may include an inorganic filler such as titanium dioxide, a titanate, or a combination thereof.

The additive composition may include a reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agents, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations including at least one of the foregoing heat stabilizers. The heat stabilizer can be tris(2,4-di-t-butylphenyl) phosphate available as IRGAPHOS™ 168.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations including at least one of the foregoing plasticizers, lubricants, and mold release agents.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB™ UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec Industries Inc., Woodland, NJ) or combinations including at least one of the foregoing light stabilizers.

Antioxidant additives include organophosphites such as tris(nonyl phenyl)phosphite, tris(2,4-di-t-butylphenyl) phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations including at least one of the foregoing antioxidants.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN includes 50 wt% PTFE and 50 wt% SAN, based on the total weight of the encapsulated fluoropolymer. The SAN can include, for example, 75 wt% styrene and 25 wt% acrylonitrile based on the total weight of the copolymer.

In some aspects the total amount of all of the additives in the resin composition is from about 0.01 wt% to about 12 wt%, or from about 0.03 wt% to about 12 wt%, or from about 0.05 wt% to about 12 wt%, or from about 0.07 wt% to about 12 wt%, or from about 0.1 wt% to about 12 wt%, or from about 0.2 wt% to about 12 wt%, or from about 0.3 wt% to about 12 wt%, or from about 0.4 wt% to about 12 wt%, or from about 0.5 wt% to about 12 wt%, or from about 0.01 wt% to about 11 wt%, or from about 0.01 wt% to about 10 wt%, or from about 0.01 wt% to about 9 wt%, or from about 0.01 wt% to about 8 wt%, or from about 0.01 wt% to about 7 wt%, or from about 0.01 wt% to about 6 wt%, or from about 0.01 wt% to about 5 wt%, or from about 0.01 wt% to about 4 wt%, or from about 0.01 wt% to about 3 wt%, or from about 0.01 wt% to about 2 wt%, or from about 0.01 wt% to about 1 wt%, based on the total weight of the composition.

### *Methods of Manufacture*

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy,

electromagnetic energy, thermal energy or combinations including at least one of the foregoing forces or forms of energy. The barrel temperature on the extruder during compounding can be set at the temperature where at least a portion of the polymer has reached a temperature greater than or equal to about the melting temperature, if the resin is a semi-crystalline organic polymer, or the flow point (for example, the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects, the melt processed composition exits processing equipment such as an extruder through small exit holes in a die. The resulting strands of molten resin may be cooled by passing the strands through a water bath. The cooled strands can be chopped into pellets for packaging and further handling.

In certain aspects, the blends may be processed using a clean compound solution where the materials are compounded in deionized water.

Methods may further include processing the composite to provide a plaque of a desired thickness. Plaques can be extruded, injection molded, compression molded, or injection-compression molded, and may have a thickness between about 0.4 mm and 6 mm. Other processes could also be applied to the thin thermoplastic film, including but not limited to, lamination, co-extrusion, thermoforming or hot pressing. In such aspects, further layers of other materials (for example, other thermoplastic polymer layers, metallic layers, etc.) could be combined with the composite.

### *Properties and Articles*

The disclosed polymer compositions may exhibit improved long term mechanical properties including improved creep and/or fatigue. As an example, the composition may exhibit a percent improvement in creep of at least 40% when measured in accordance with ASTM E13. In some examples, the composition has a transmission value of at least 65% at a thickness of at least 3.0 mm thickness. In further examples, the composition has a transmission of at least 80% at 1 mm thickness. In yet further examples, the composition has a transmission of at least 85 at 2 mm thickness. The composition may exhibit a haze of less than 45 at 2 mm, or less than 60 at 3 mm, when measured by hazemeter in accordance with ISO 14782 or ISO 13468.

In yet further aspects, the disclosed composition achieves at least 10,000 cycles to failure when observed in a fatigue test on injection molded tensile bars of the composition at room temperature using a dynamic testing instrument at a stress of 37.8 MPa. The composition may achieve at least 15,000 cycles to failure when observed in a fatigue test on injection molded tensile bars of the composition at 60 °C using a dynamic testing instrument at a stress of 37.8 MPa.

In various aspects, the present disclosure relates to articles including the compositions herein. The compositions can be molded into useful shaped articles by a variety of means such as injection molding, extrusion, rotational molding, blow molding and thermoforming to form articles. These compositions may be useful in the manufacture of articles requiring materials with good flow, good impact strength, and good dielectric strength. The compositions may be useful for electrically conducting purposes as well.

The advantageous characteristics of the compositions disclosed herein make them appropriate for an array of uses. The disclosed compositions may be useful in water-based applications such as transparent housings for water management including filter housings or filter bowls, or water hammer arrestors, for example.

In some aspects, the disclosed formulations meet international standards for potable water or applicable potable water certifications, including NSF/ANSI/CAN 61, ACS, WRAS, KTW, and W270.

Various combinations of elements of this disclosure are encompassed by this disclosure, for example, combinations of elements from dependent claims that depend upon the same independent claim.

### *Definitions*

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt%," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

As used herein, the terms "number average molecular weight" or "Mn" can be used interchangeably, and refer to

the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, for example, polycarbonate polymers, by methods well known to a person having ordinary skill in the art using molecular weight standards, ***e.g.,*** polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, for example, polycarbonate polymers, by methods well known to a person having ordinary skill in the art using molecular weight standards, for example, polycarbonate standards or polystyrene standards, preferably certified or traceable molecular weight standards.

As used herein, degree of polymerization, n, may describe the number of monomeric units (or repeating units) in a given polymer molecule.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

In one aspect, "substantially free of" can be less than about 0.5 weight percent (wt%). In another aspect, substantially free of can be less than about 0.1 wt%. In another aspect, substantially free of can be less than about 0.01 wt%. In yet another aspect, substantially free of can be less than about 100 ppm. In yet another aspect, substantially free can refer to an amount, if present at all, below a detectable level. In one aspect, the compositions of the present disclosure are free of or substantially free of carbon filler or carbon-based filler. In certain aspects, to maintain colorability of the disclosed compositions, the compositions may be free of or substantially free of carbon black, carbon fiber, and/or graphite.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

***Aspects of the Disclosure***

In various aspects, the present disclosure pertains to and includes at least the following aspects.

Aspect 1. A composition comprising:

(a) from about 55 wt% to about 89 wt% of a polycarbonate-polysiloxane copolymer;
(b) from about 0.01 wt% to about 30 wt% of

  i. a polycarbonate homopolymer, or
  ii. a cycloaliphatic polyester; and

(c) from about 8 wt% to about 25 wt% of a reinforcing filler,

wherein the combined weight percent value of all components does not exceed 100 wt%, all weight percent values are

based on the total weight of the composition, and
wherein a specimen comprising the composition and having a thickness of at least 1 mm exhibits a transmission of at least 80% as tested with a hazemeter in accordance with ISO 14782 and ISO 13468.

Aspect 2. The composition according to Aspect 1, wherein the polycarbonate-polysiloxane copolymer has a siloxane content of at least 5 mol. % siloxane based on the total weight of the polycarbonate-polysiloxane copolymer.
Aspect 3. The composition according to Aspect 1 or 2, wherein the polycarbonate-polysiloxane copolymer has a molecular weight of at least 20,000 g/mol when determined by gel permeation chromatography based on a polycarbonate standard.
Aspect 4. The composition according to any one of Aspects 1-3, wherein the polycarbonate homopolymer is derived from linear bisphenol A units.
Aspect 5. The composition according to any one of Aspects 1-4, wherein the reinforcing filler comprises glass fiber.
Aspect 6. The composition according to any one of Aspects 1-5, wherein reinforcing filler comprises a flat glass fiber.
Aspect 7. The composition according to any one of Aspects 1-6, wherein the cycloaliphatic polyester comprises poly(1,4-cyclohexylenedimethylene 1,4-cyclohexanedicarboxylate) (PCCD) polyester.
Aspect 8. The composition according to any one of Aspects 1-7, wherein the cycloaliphatic polyester comprises PCTG.
Aspect 9. The composition according to any one of Aspects 1-8, wherein the polycarbonate homopolymer is present in an amount from 0.01 wt% to 10 wt%.
Aspect 10. The composition according to any one of Aspects 1-9, wherein the cycloaliphatic polyester is present in an amount of 8 wt% to 30 wt%.
Aspect 11. The composition according to any one of Aspects 1-10, wherein the composition exhibits a haze of less than 45 at 2 mm, or less than 60 at 3 mm, when measured by hazemeter in accordance with ISO 14782 or ISO 13468.
Aspect 12. The composition according to any one of Aspects 1-11, wherein the composition achieves at least 10,000 cycles to failure when observed in a fatigue test on injection molded tensile bars of the composition at room temperature using a dynamic testing instrument at a stress of 37.8 MPa.
Aspect 13. The composition according to any one of Aspects 1-12, wherein the composition achieves at least 15,000 cycles to failure when observed in a fatigue test on injection molded tensile bars of the composition at 60 °C using a dynamic testing instrument at a stress of 37.8 MPa.
Aspect 14. The composition according to any one of Aspects 1-13, further comprising an additive material, the additive material selected from the group consisting of: an acid scavenger; an antioxidant; a colorant; a dye; a flow promoter; a flow modifier; an impact modifier; a lubricant; a mold release agent; a pigment; a colorant, a quenching agent; a thermal stabilizer; an ultraviolet (UV) absorbent; a UV reflectant; a UV stabilizer; a flame retardant; and combinations thereof.
Aspect 15. An article formed from the composition of any one of Aspects 1-14.
Aspect 16. The article according to Aspect 15, wherein the article is a component of a transparent water housing.
Aspect 17. A method of forming a composition, the method comprising:

(a) combining, to form a mixture,

i. from about 55 wt% to about 90 wt% of a polycarbonate-polysiloxane copolymer,
ii. from about 0.01 wt% to about 30 wt% of

a. a polycarbonate homopolymer, or
b. a poly(1,4-cyclohexylenedimethylene 1,4-cyclohexanedicarboxylate) (PCCD) polyester, and

iii. from about 10 wt% to about 20 wt% of a reinforcing filler; and

(b) extruding the mixture to form the composition,

wherein the combined weight percent value of all components does not exceed 100 wt%, and all weight percent values are based on the total weight of the composition, and
wherein a specimen comprising the composition and having a thickness of at least 1 mm exhibits a transmission of at least 80% as tested with a hazemeter in accordance with ISO 14782 and ISO 13468.

***EXAMPLES***

The following examples are put forth so as to provide those of ordinary skill in the art with a complete disclosure and description of how the compounds, compositions, articles, devices and/or methods claimed herein are made and evaluated and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, for example, component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

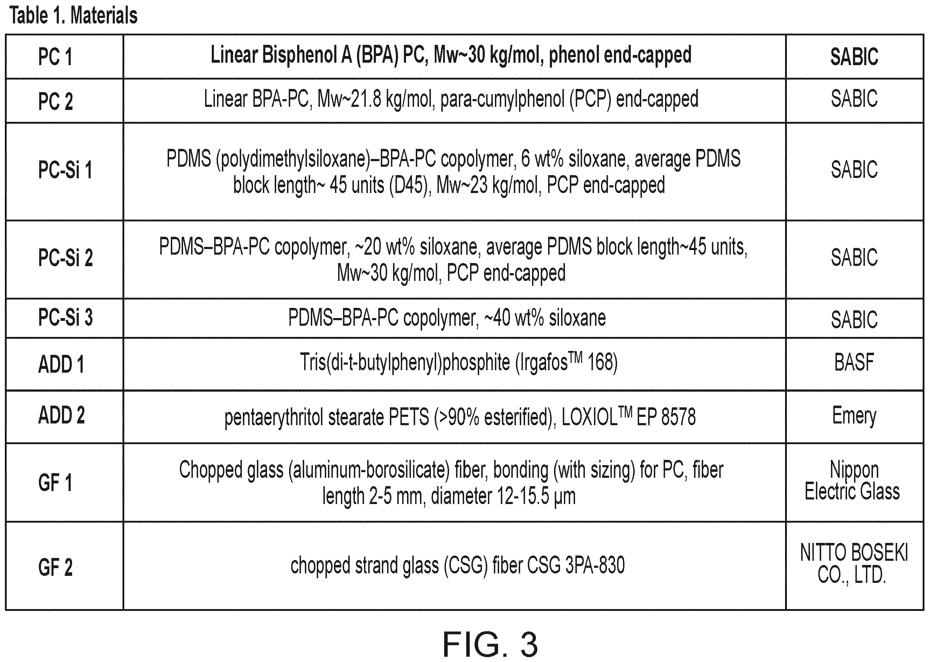

Various compositions were prepared by compounding on a 37 mm twin screw extruder from the raw materials shown in Table 1 (shown in FIG. 3). For additional detail, PC-Si 3 in Table 1 is a PDMS (polydimethylsiloxane)-Bisphenol A polycarbonate copolymer including 40 wt% siloxane with an average PDMS block length of 45 units, having a Mw of 37,000 to 38,000 grams per mole as determined by gel permeation chromatography relative to linear bisphenol A polycarbonate standards, and which is produced by interfacial polymerization and endcapped with p-cumylphenol.

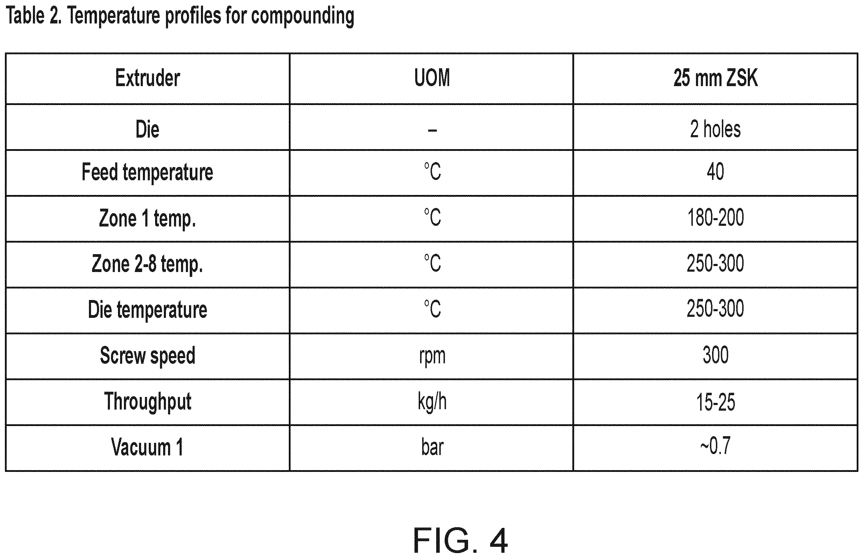

Formulations were prepared by compounding on a 25 mm Werner Pfleiderer ZSK co-rotating twin-screw extruder with a vacuum vented standard LEXAN™ mixing screw operated at a screw speed of 300 rpm. The temperature profile is given in Table 2. The strand was cooled through a water bath prior to pelletizing. An Engel 45,75, 90 molding machine was used to mold the test parts for standard physical property testing. The pellets were dried for 3-4 hours at 90-110 °C in a forced air-circulating oven prior to injection molding. Table 2 (FIG. 4) lists the temperature profiles of the molding conditions.

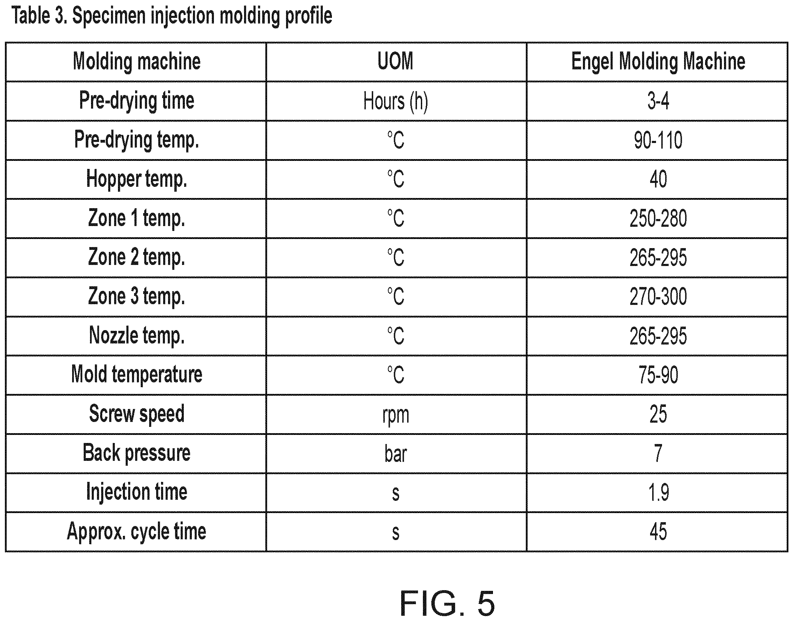

Injection molding conditions are shown in Table 3 (FIG. 5). An Engel 45,75, 90 molding machine was used to mold the test parts for standard physical property testing. The pellets were dried for 3-4 hours at 90-110 °C in a forced air-circulating oven prior to injection molding.

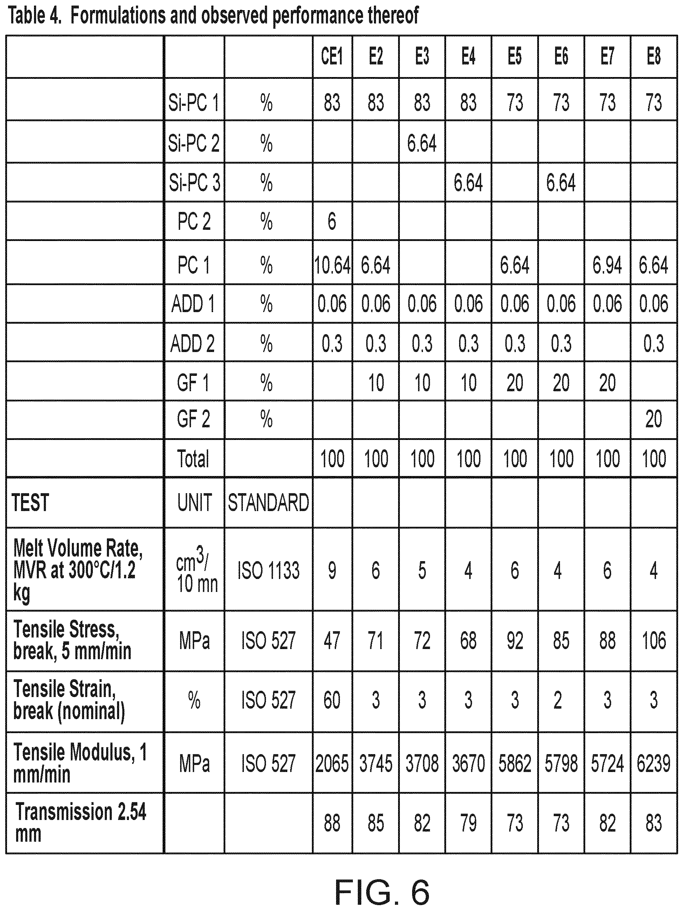

Table 4 (FIG. 6) presents the formulations and properties observed. Tensile properties were measured on a Zwick Z010 tensile flex robot at 23 °C, 50 mm/min according to ISO527. Melt Volume Rate (MVR) was measured according to ISO1133 using the following conditions: 300°C, 300 sec dwell time, 1.2 kg. Transmission measurement by hazemeter. (ISO 14782 and ISO 13468).As can be seen, addition of 10GF to the formulation of CE1 allows to maintain transparent samples. Addition of 20 Gf lowers transparency, however leaving out ADD2 or switching from GF1 to GF2 brings back transparency.

Table 4. Formulations and observed performance thereof.

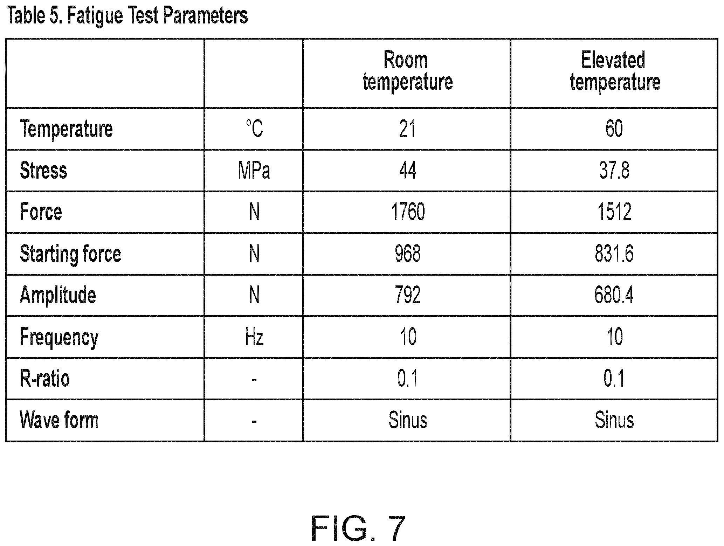

Fatigue resistance was measured on injection-molded tensile bars using an Instron ElectroPuls E10000 dynamic testing instrument for the formulations as indicated in table 4. Table 5 (FIG. 7) shows the parameters for two protocols, all tests are performed in triplets. In addition, a PA12 material typically used for water filter housing applications was taken along.

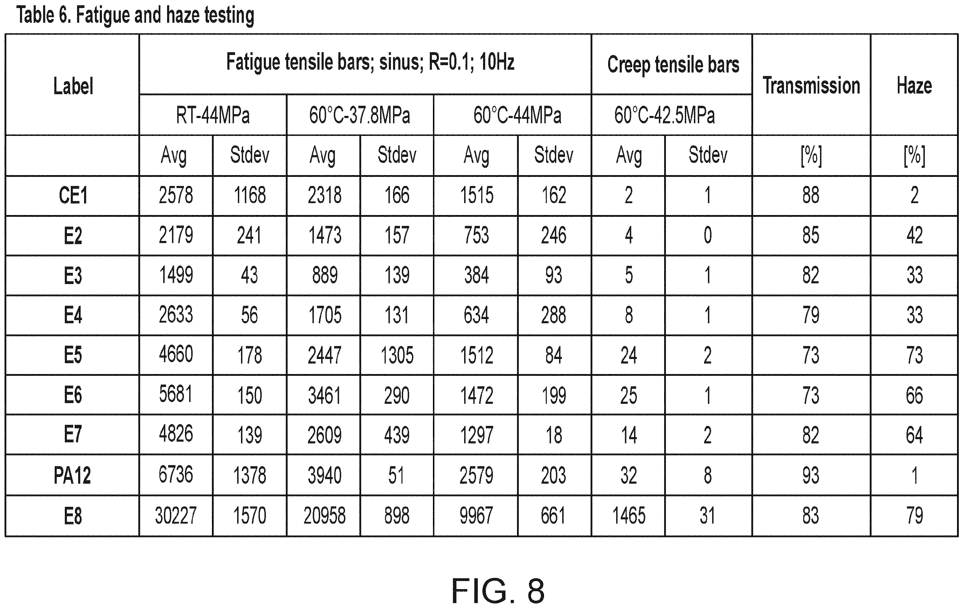

Table 6 (FIG. 8) shows the tensile fatigue cycles to failure for samples CE1 and E1 through E8 as well as the haze. Haze and transmission were measured with a hazemeter in accordance with ISO 14782 and ISO 13468.

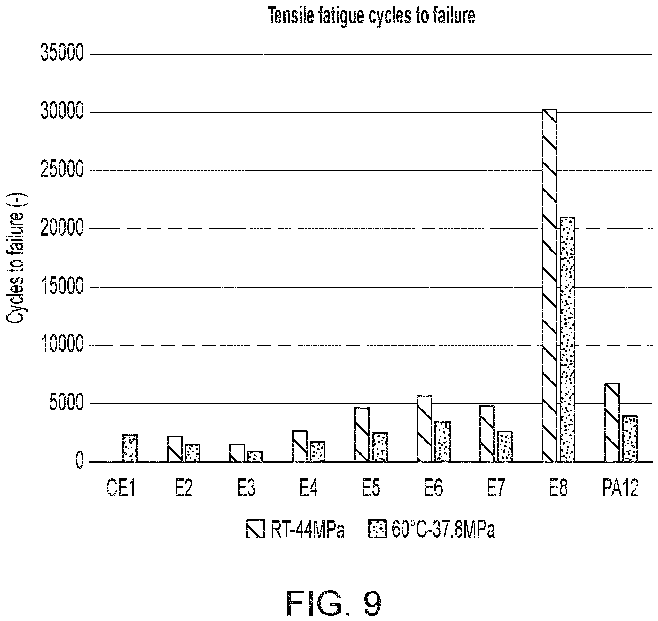

FIG. 9 is a graphical representation of the fatigue results.

As can be seen from Table 6 and FIGS. 8 and 9 the tensile fatigue for glass fiber filled samples is increased (E2-E4) and even more so for E5-E7. Surprisingly, the fatigue performance of E8 was significantly improved vs other samples having 20 wt% glass fiber, while maintaining acceptable transparency (that is, at least 80%).

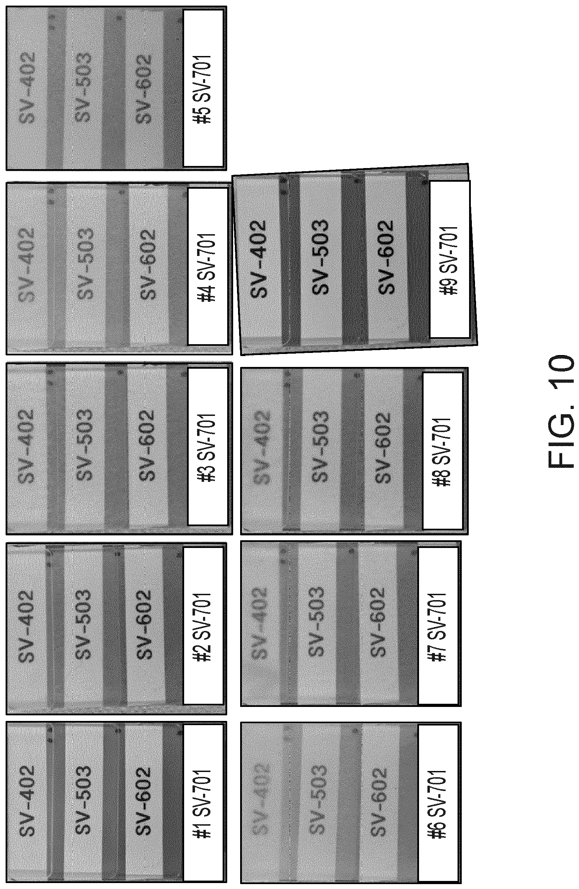

Samples were also visibly inspected for haze to approximate the performance of transparent water housing that allows a viewer to see through the plastic to read text. For the visual inspection, plastic parts of various thicknesses (1 to 4 mm) were formed and placed on a glass jar and a text was placed at 3.5 mm distance. FIG. 10 presents the results of the visibility test observed with the naked eye. Samples designated SV-402 were 4 mm, SV-503 were 3 mm, SV-602 were 2 mm, and SV-701 were 1 mm in thickness.

As shown in FIG. 10, CE1 (corresponding to #1) has a thinner thickness but a similar performance to E8 (corresponding to #9) indicated by SV-701 and SV-601 for example. However, at greater thickness the text becomes more blurred. Samples for E8 are visibly clearer across thicknesses.

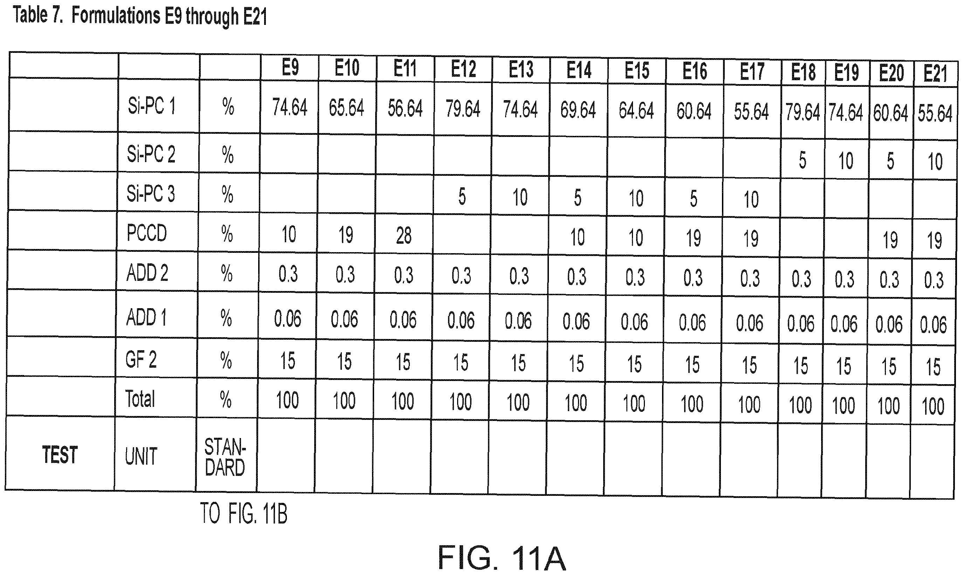

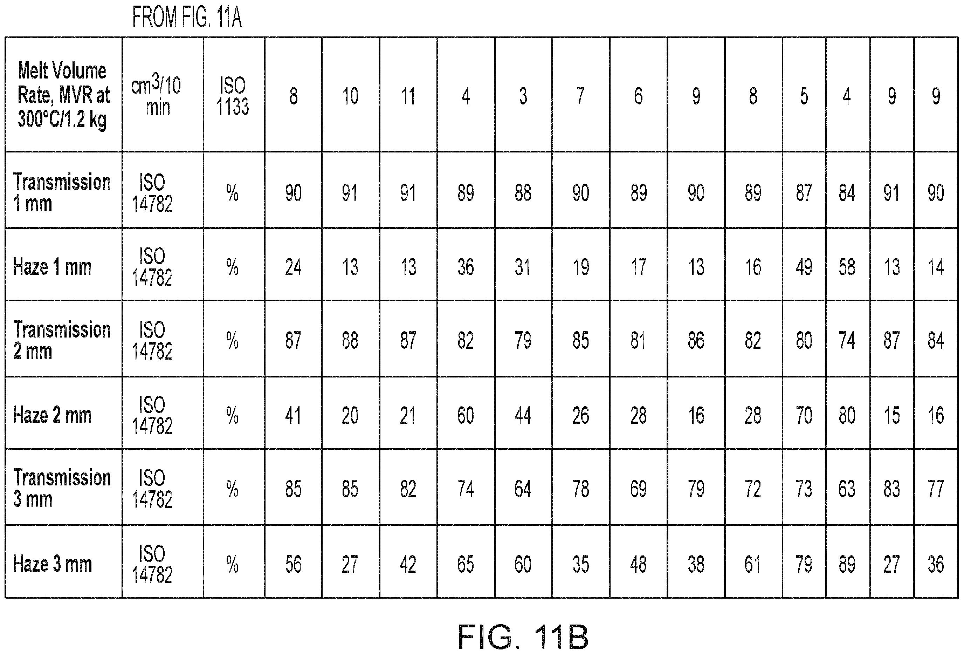

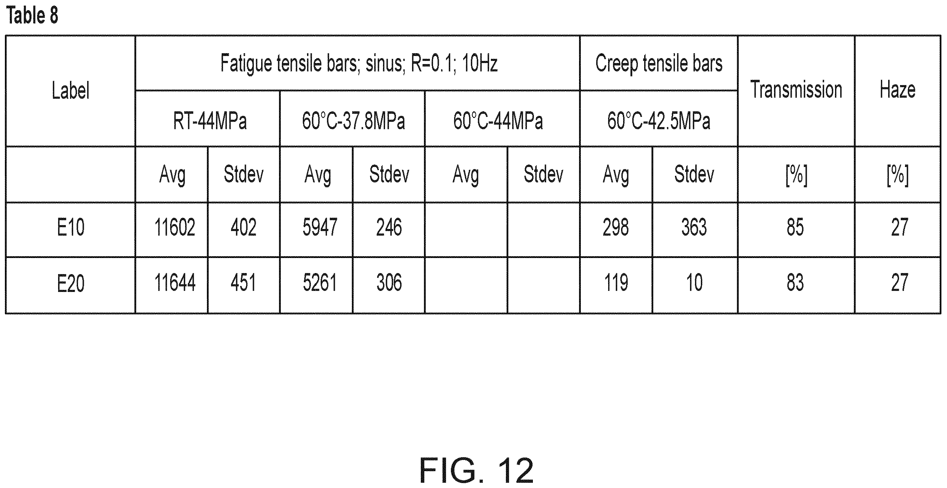

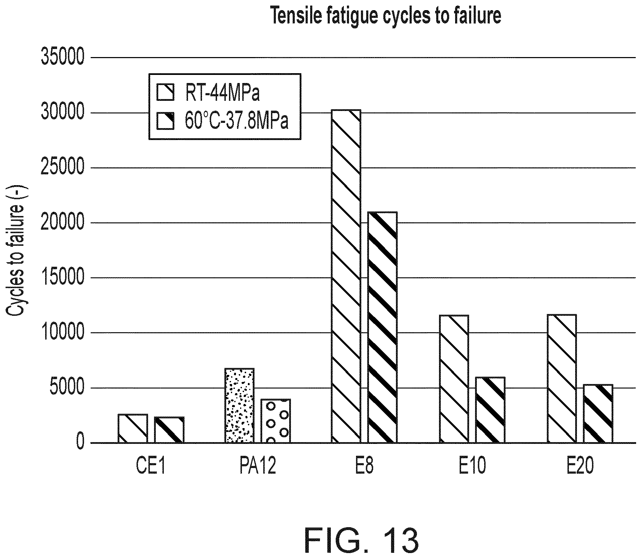

A second series of formulations E9 through E21 were prepared. These samples combined the polycarbonate-polysiloxane copolymer, PCCD, glass fiber GF2, and suitable additives. The formulations and the performance for these samples is shown in Table 7 (FIGS. 11A and 11B). As shown, samples E10 and E20 exhibited low haze levels (less than 30%) at higher thickness (3 mm). These samples were then also observed for tensile fatigue properties as shown in Table 8 (FIG. 12) (haze included for reference). FIG. 13 is a graphical representation comparing CE1, PA12, E8, E10, and E20 and showing that examples E10 and E20 exhibited higher tensile fatigue than conventional PA12 and were at greater than

10,000 cycles to failure at room temperature (23 °C) and 44 MPa and at greater than 5,000 cycles to failure at 60 °C and 37.8 MPa.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## Claims

**1.** A composition comprising:

(a) from about 55 wt% to about 89 wt% of a polycarbonate-polysiloxane copolymer;
(b) from about 0.01 wt% to about 30 wt% of

i. a polycarbonate homopolymer, or
ii. a cycloaliphatic polyester; and

(c) from about 8 wt% to about 25 wt% of a reinforcing filler,
wherein the combined weight percent value of all components does not exceed 100 wt%, all weight percent values are based on the total weight of the composition, and
wherein a specimen comprising the composition and having a thickness of at least 1 millimeter (mm) exhibits a transmission of at least 80% as tested with a hazemeter in accordance with ISO 14782 and ISO 13468.

**2.** The composition according to claim 1, wherein the polycarbonate-polysiloxane copolymer has a siloxane content of at least 5 mol. % siloxane based on the total weight of the polycarbonate-polysiloxane copolymer.

**3.** The composition according to claim 1 or 2, wherein the polycarbonate-polysiloxane copolymer has a molecular weight of at least 20,000 g/mol when determined by gel permeation chromatography based on a polycarbonate standard.

**4.** The composition according to any one of claims 1-3, wherein the polycarbonate homopolymer is derived from linear bisphenol A units.

**5.** The composition according to any one of claims 1-4, wherein the reinforcing filler comprises glass fiber.

**6.** The composition according to any one of claims 1-5, wherein reinforcing filler comprises a flat glass fiber.

**7.** The composition according to any one of claims 1-6, wherein the cycloaliphatic polyester comprises poly(1,4-cyclohexylenedimethylene 1,4-cyclohexanedicarboxylate) (PCCD) polyester.

8. The composition according to any one of claims 1-7, wherein the polycarbonate homopolymer is present in an amount from 0.01 wt% to 10 wt%.

9. The composition according to any one of claims 1-8, wherein the cycloaliphatic polyester is present in an amount of 8 wt% to 30 wt%.

10. The composition according to any one of claims 1-9, wherein the composition exhibits a haze of less than 45 at 2 mm, or less than 60 at 3 mm, when measured by hazemeter in accordance with ISO 14782 or ISO 13468.

11. The composition according to any one of claims 1-10, wherein the composition achieves at least 10,000 cycles to failure when observed in a fatigue test on injection molded tensile bars of the composition at room temperature using a dynamic testing instrument at a stress of 37.8 MPa.

12. The composition according to any one of claims 1-11, wherein the composition achieves at least 15,000 cycles to failure when observed in a fatigue test on injection molded tensile bars of the composition at 60 °C using a dynamic testing instrument at a stress of 37.8 MPa.

13. The composition according to any one of claims 1-12, further comprising an additive material, the additive material selected from the group consisting of: an acid scavenger; an antioxidant; a colorant; a dye; a flow promoter; a flow modifier; an impact modifier; a lubricant; a mold release agent; a pigment; a colorant, a quenching agent; a thermal stabilizer; an ultraviolet (UV) absorbent; a UV reflectant; a UV stabilizer; a flame retardant; and combinations thereof.

14. An article formed from the composition of any one of claims 1-13, wherein the article is a component of a transparent water housing.

15. A method of forming a composition, the method comprising:

(a) combining, to form a mixture,

i. from about 55 wt% to about 90 wt% of a polycarbonate-polysiloxane copolymer,
ii. from about 0.01 wt% to about 30 wt% of

a. a polycarbonate homopolymer, or
b. a poly(1,4-cyclohexylenedimethylene 1,4-cyclohexanedicarboxylate) (PCCD) polyester, and

iii. from about 10 wt% to about 20 wt% of a reinforcing filler; and

(b) extruding the mixture to form the composition,
wherein the combined weight percent value of all components does not exceed 100 wt%, and all weight percent values are based on the total weight of the composition, and
wherein a specimen comprising the composition and having a thickness of at least 1 mm exhibits a transmission of at least 80% as tested with a hazemeter in accordance with ISO 14782 and ISO 13468.

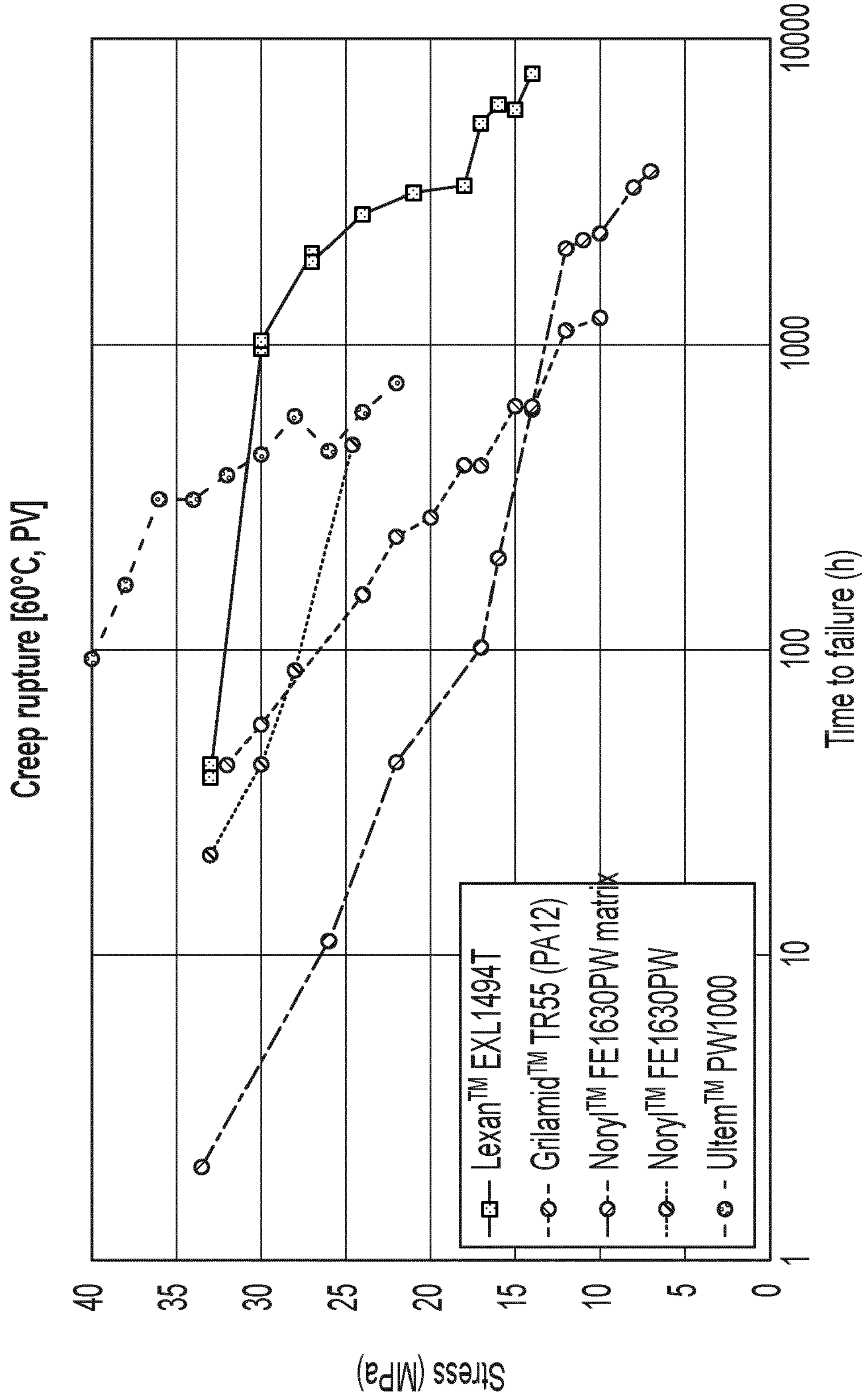
Creep rupture [60°C, PV]
Stress (MPa)
40
35
30
25
20
15
10
5
0
1
10
100
1000
10000
Time to failure (h)
Lexan™ EXL1494T
Grilamid™ TR55 (PA12)
Noryl™ FE1630PW matrix
Noryl™ FE1630PW
Ultem™ PW1000

FIG. 1

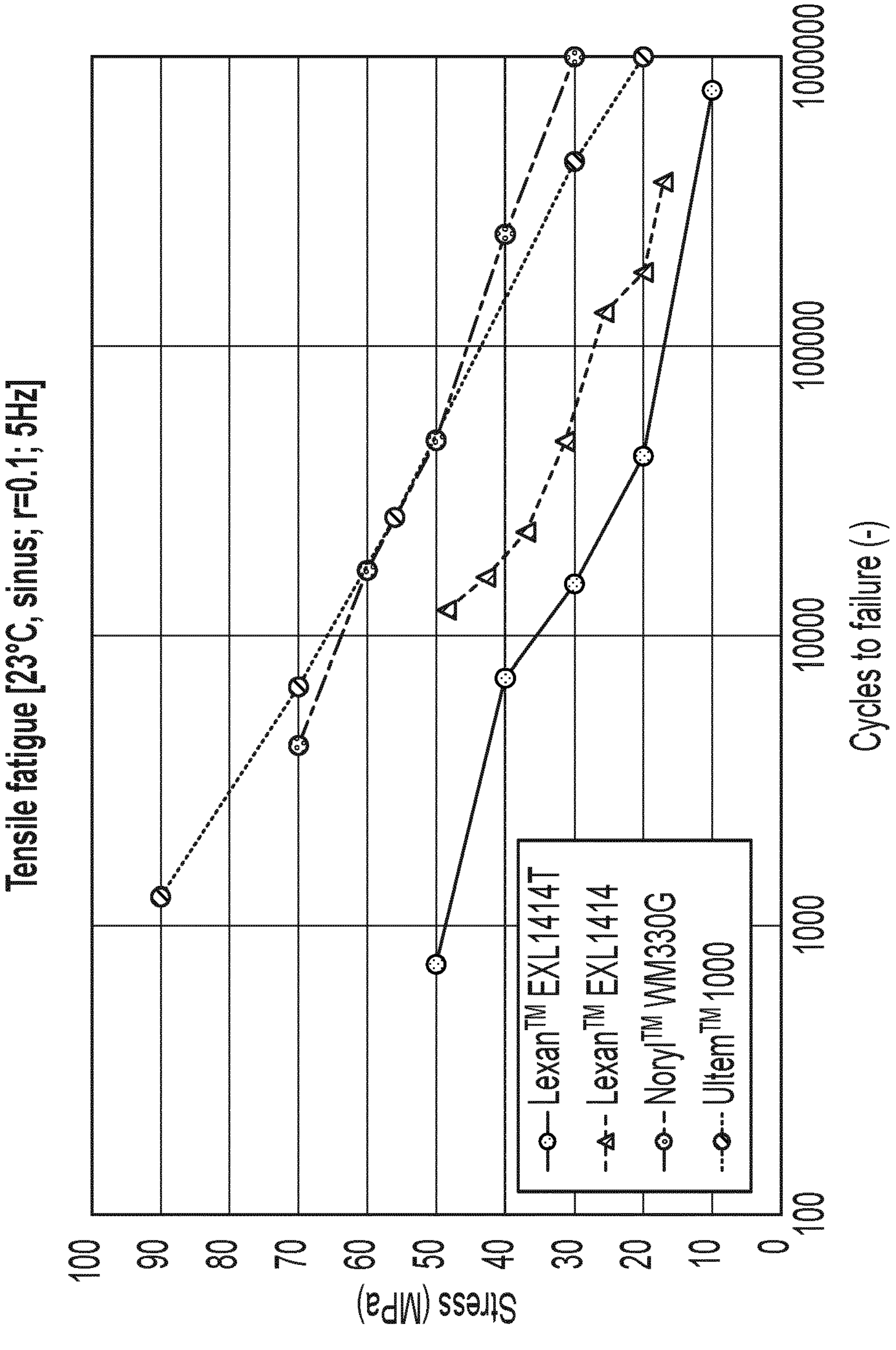
Tensile fatigue [23°C, sinus; r=0.1; 5Hz]
Stress (MPa)
100
90
80
70
60
50
40
30
20
10
0
100
1000
10000
100000
1000000
Cycles to failure (-)
Lexan™ EXL1414T
Lexan™ EXL1414
Noryl™ WM330G
Ultem™ 1000

FIG. 2

**Table 1. Materials**

| | | |
|---|---|---|
| **PC 1** | **Linear Bisphenol A (BPA) PC, Mw~30 kg/mol, phenol end-capped** | **SABIC** |
| **PC 2** | Linear BPA-PC, Mw~21.8 kg/mol, para-cumylphenol (PCP) end-capped | SABIC |
| **PC-Si 1** | PDMS (polydimethylsiloxane)–BPA-PC copolymer, 6 wt% siloxane, average PDMS block length~ 45 units (D45), Mw~23 kg/mol, PCP end-capped | SABIC |
| **PC-Si 2** | PDMS–BPA-PC copolymer, ~20 wt% siloxane, average PDMS block length~45 units, Mw~30 kg/mol, PCP end-capped | SABIC |
| **PC-Si 3** | PDMS–BPA-PC copolymer, ~40 wt% siloxane | SABIC |
| **ADD 1** | Tris(di-t-butylphenyl)phosphite (Irgafos™ 168) | BASF |
| **ADD 2** | pentaerythritol stearate PETS (>90% esterified), LOXIOL™ EP 8578 | Emery |
| **GF 1** | Chopped glass (aluminum-borosilicate) fiber, bonding (with sizing) for PC, fiber length 2-5 mm, diameter 12-15.5 µm | Nippon Electric Glass |
| **GF 2** | chopped strand glass (CSG) fiber CSG 3PA-830 | NITTO BOSEKI CO., LTD. |

FIG. 3

Table 2. Temperature profiles for compounding

| Extruder | UOM | 25 mm ZSK |
|---|---|---|
| Die | – | 2 holes |
| Feed temperature | °C | 40 |
| Zone 1 temp. | °C | 180-200 |
| Zone 2-8 temp. | °C | 250-300 |
| Die temperature | °C | 250-300 |
| Screw speed | rpm | 300 |
| Throughput | kg/h | 15-25 |
| Vacuum 1 | bar | ~0.7 |

FIG. 4

Table 3. Specimen injection molding profile

| Molding machine | UOM | Engel Molding Machine |
|---|---|---|
| Pre-drying time | Hours (h) | 3-4 |
| Pre-drying temp. | °C | 90-110 |
| Hopper temp. | °C | 40 |
| Zone 1 temp. | °C | 250-280 |
| Zone 2 temp. | °C | 265-295 |
| Zone 3 temp. | °C | 270-300 |
| Nozzle temp. | °C | 265-295 |
| Mold temperature | °C | 75-90 |
| Screw speed | rpm | 25 |
| Back pressure | bar | 7 |
| Injection time | s | 1.9 |
| Approx. cycle time | s | 45 |

FIG. 5

Table 4. Formulations and observed performance thereof

| | | | CE1 | E2 | E3 | E4 | E5 | E6 | E7 | E8 |
|---|---|---|---|---|---|---|---|---|---|---|
| | Si-PC 1 | % | 83 | 83 | 83 | 83 | 73 | 73 | 73 | 73 |
| | Si-PC 2 | % | | | 6.64 | | | | | |
| | Si-PC 3 | % | | | | 6.64 | | 6.64 | | |
| | PC 2 | % | 6 | | | | | | | |
| | PC 1 | % | 10.64 | 6.64 | | | 6.64 | | 6.94 | 6.64 |
| | ADD 1 | % | 0.06 | 0.06 | 0.06 | 0.06 | 0.06 | 0.06 | 0.06 | 0.06 |
| | ADD 2 | % | 0.3 | 0.3 | 0.3 | 0.3 | 0.3 | 0.3 | | 0.3 |
| | GF 1 | % | | 10 | 10 | 10 | 20 | 20 | 20 | |
| | GF 2 | % | | | | | | | | 20 |
| | Total | | 100 | 100 | 100 | 100 | 100 | 100 | 100 | 100 |
| **TEST** | UNIT | STANDARD | | | | | | | | |
| **Melt Volume Rate, MVR at 300°C/1.2 kg** | $cm^3$/ 10 mn | ISO 1133 | 9 | 6 | 5 | 4 | 6 | 4 | 6 | 4 |
| **Tensile Stress, break, 5 mm/min** | MPa | ISO 527 | 47 | 71 | 72 | 68 | 92 | 85 | 88 | 106 |
| **Tensile Strain, break (nominal)** | % | ISO 527 | 60 | 3 | 3 | 3 | 3 | 2 | 3 | 3 |
| **Tensile Modulus, 1 mm/min** | MPa | ISO 527 | 2065 | 3745 | 3708 | 3670 | 5862 | 5798 | 5724 | 6239 |
| **Transmission 2.54 mm** | | | 88 | 85 | 82 | 79 | 73 | 73 | 82 | 83 |

FIG. 6

Table 5. Fatigue Test Parameters

| | | Room temperature | Elevated temperature |
|---|---|---|---|
| Temperature | °C | 21 | 60 |
| Stress | MPa | 44 | 37.8 |
| Force | N | 1760 | 1512 |
| Starting force | N | 968 | 831.6 |
| Amplitude | N | 792 | 680.4 |
| Frequency | Hz | 10 | 10 |
| R-ratio | - | 0.1 | 0.1 |
| Wave form | - | Sinus | Sinus |

FIG. 7

Table 6. Fatigue and haze testing

| Label | Fatigue tensile bars; sinus; R=0.1; 10Hz | | | | | | Creep tensile bars | | Transmission | Haze |
|---|---|---|---|---|---|---|---|---|---|---|
| | RT-44MPa | | 60°C-37.8MPa | | 60°C-44MPa | | 60°C-42.5MPa | | | |
| | Avg | Stdev | Avg | Stdev | Avg | Stdev | Avg | Stdev | [%] | [%] |
| **CE1** | 2578 | 1168 | 2318 | 166 | 1515 | 162 | 2 | 1 | 88 | 2 |
| **E2** | 2179 | 241 | 1473 | 157 | 753 | 246 | 4 | 0 | 85 | 42 |
| **E3** | 1499 | 43 | 889 | 139 | 384 | 93 | 5 | 1 | 82 | 33 |
| **E4** | 2633 | 56 | 1705 | 131 | 634 | 288 | 8 | 1 | 79 | 33 |
| **E5** | 4660 | 178 | 2447 | 1305 | 1512 | 84 | 24 | 2 | 73 | 73 |
| **E6** | 5681 | 150 | 3461 | 290 | 1472 | 199 | 25 | 1 | 73 | 66 |
| **E7** | 4826 | 139 | 2609 | 439 | 1297 | 18 | 14 | 2 | 82 | 64 |
| **PA12** | 6736 | 1378 | 3940 | 51 | 2579 | 203 | 32 | 8 | 93 | 1 |
| **E8** | 30227 | 1570 | 20958 | 898 | 9967 | 661 | 1465 | 31 | 83 | 79 |

FIG. 8

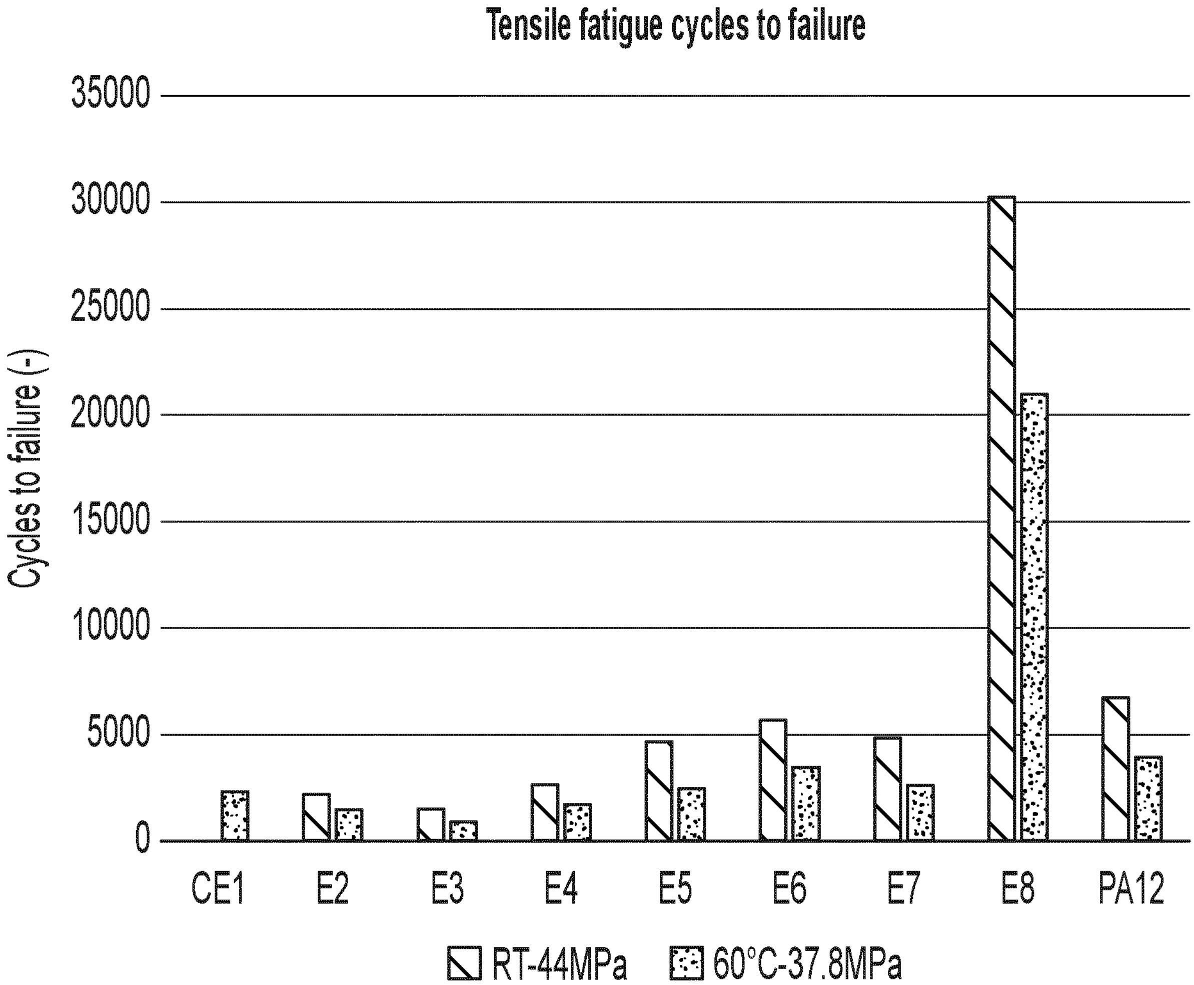
Tensile fatigue cycles to failure
Cycles to failure (-)
35000
30000
25000
20000
15000
10000
5000
0
CE1
E2
E3
E4
E5
E6
E7
E8
PA12
RT-44MPa
60°C-37.8MPa

FIG. 9

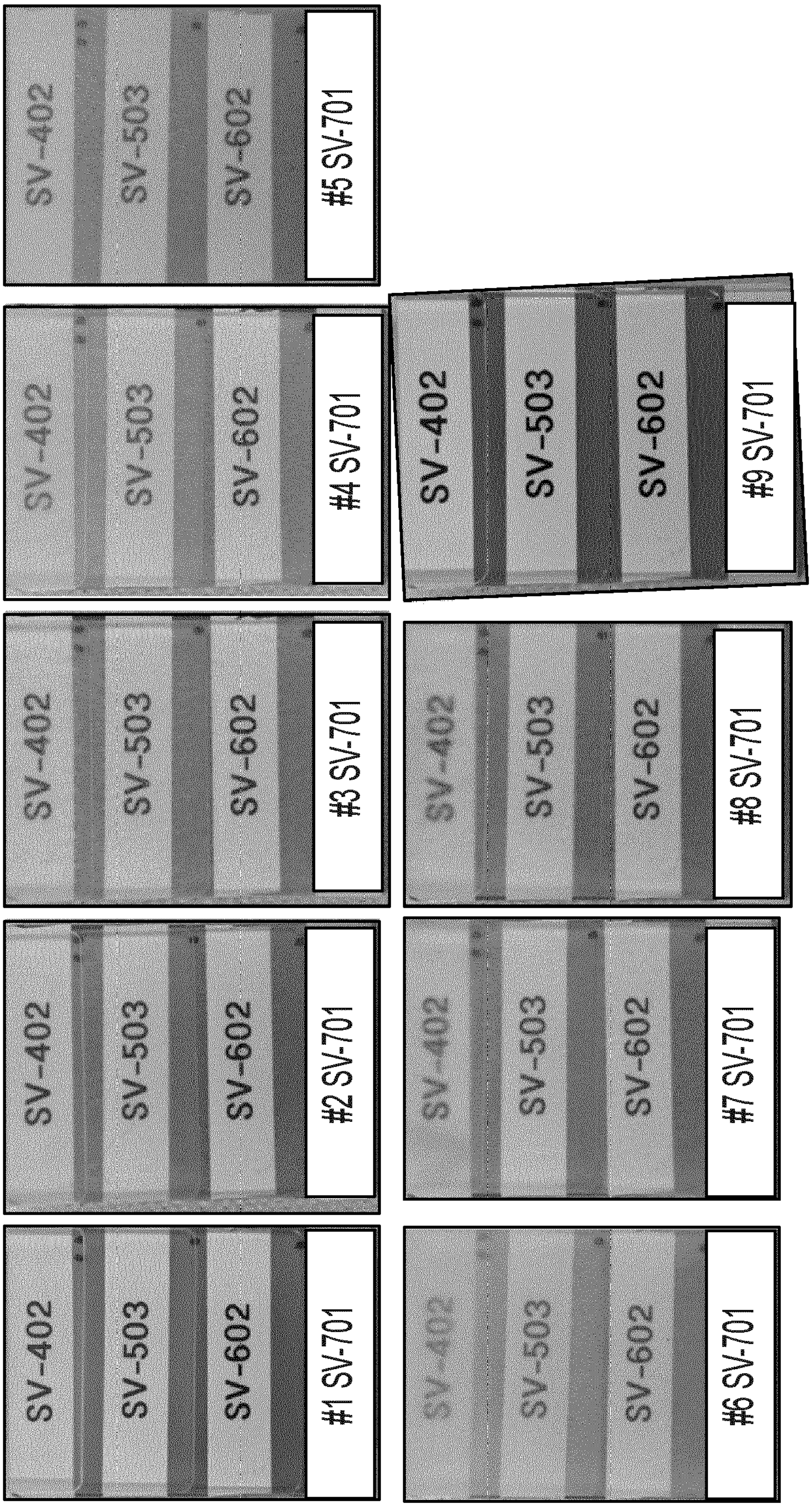
SV-402
SV-503
SV-602
#1 SV-701
SV-402
SV-503
SV-602
#2 SV-701
SV-402
SV-503
SV-602
#3 SV-701
SV-402
SV-503
SV-602
#4 SV-701
SV-402
SV-503
SV-602
#5 SV-701
SV-402
SV-503
SV-602
#6 SV-701
SV-402
SV-503
SV-602
#7 SV-701
SV-402
SV-503
SV-602
#8 SV-701
SV-402
SV-503
SV-602
#9 SV-701

FIG. 10

Table 7. Formulations E9 through E21

| | | | E9 | E10 | E11 | E12 | E13 | E14 | E15 | E16 | E17 | E18 | E19 | E20 | E21 |
|---|---|---|---|---|---|---|---|---|---|---|---|---|---|---|---|
| | Si-PC 1 | % | 74.64 | 65.64 | 56.64 | 79.64 | 74.64 | 69.64 | 64.64 | 60.64 | 55.64 | 79.64 | 74.64 | 60.64 | 55.64 |
| | Si-PC 2 | % | | | | | | | | | | 5 | 10 | 5 | 10 |
| | Si-PC 3 | % | | | | 5 | 10 | 5 | 10 | 5 | 10 | | | | |
| | PCCD | % | 10 | 19 | 28 | | | 10 | 10 | 19 | 19 | | | 19 | 19 |
| | ADD 2 | % | 0.3 | 0.3 | 0.3 | 0.3 | 0.3 | 0.3 | 0.3 | 0.3 | 0.3 | 0.3 | 0.3 | 0.3 | 0.3 |
| | ADD 1 | % | 0.06 | 0.06 | 0.06 | 0.06 | 0.06 | 0.06 | 0.06 | 0.06 | 0.06 | 0.06 | 0.06 | 0.06 | 0.06 |
| | GF 2 | % | 15 | 15 | 15 | 15 | 15 | 15 | 15 | 15 | 15 | 15 | 15 | 15 | 15 |
| | Total | % | 100 | 100 | 100 | 100 | 100 | 100 | 100 | 100 | 100 | 100 | 100 | 100 | 100 |
| TEST | UNIT | STAN-DARD | | | | | | | | | | | | | |

TO FIG. 11B

FIG. 11A

FROM FIG. 11A

| | | | | | | | | | | | | | | | |
|---|---|---|---|---|---|---|---|---|---|---|---|---|---|---|---|
| Melt Volume Rate, MVR at 300°C/1.2 kg | $cm^3/10$ min | ISO 1133 | 8 | 10 | 11 | 4 | 3 | 7 | 6 | 9 | 8 | 5 | 4 | 9 | 9 |
| Transmission 1 mm | ISO 14782 | % | 90 | 91 | 91 | 89 | 88 | 90 | 89 | 90 | 89 | 87 | 84 | 91 | 90 |
| Haze 1 mm | ISO 14782 | % | 24 | 13 | 13 | 36 | 31 | 19 | 17 | 13 | 16 | 49 | 58 | 13 | 14 |
| Transmission 2 mm | ISO 14782 | % | 87 | 88 | 87 | 82 | 79 | 85 | 81 | 86 | 82 | 80 | 74 | 87 | 84 |
| Haze 2 mm | ISO 14782 | % | 41 | 20 | 21 | 60 | 44 | 26 | 28 | 16 | 28 | 70 | 80 | 15 | 16 |
| Transmission 3 mm | ISO 14782 | % | 85 | 85 | 82 | 74 | 64 | 78 | 69 | 79 | 72 | 73 | 63 | 83 | 77 |
| Haze 3 mm | ISO 14782 | % | 56 | 27 | 42 | 65 | 60 | 35 | 48 | 38 | 61 | 79 | 89 | 27 | 36 |

FIG. 11B

**Table 8**

| Label | Fatigue tensile bars; sinus; R=0.1; 10Hz | | | | | | Creep tensile bars | | Transmission | Haze |
|---|---|---|---|---|---|---|---|---|---|---|
| | RT-44MPa | | 60°C-37.8MPa | | 60°C-44MPa | | 60°C-42.5MPa | | | |
| | Avg | Stdev | Avg | Stdev | Avg | Stdev | Avg | Stdev | [%] | [%] |
| E10 | 11602 | 402 | 5947 | 246 | | | 298 | 363 | 85 | 27 |
| E20 | 11644 | 451 | 5261 | 306 | | | 119 | 10 | 83 | 27 |

FIG. 12

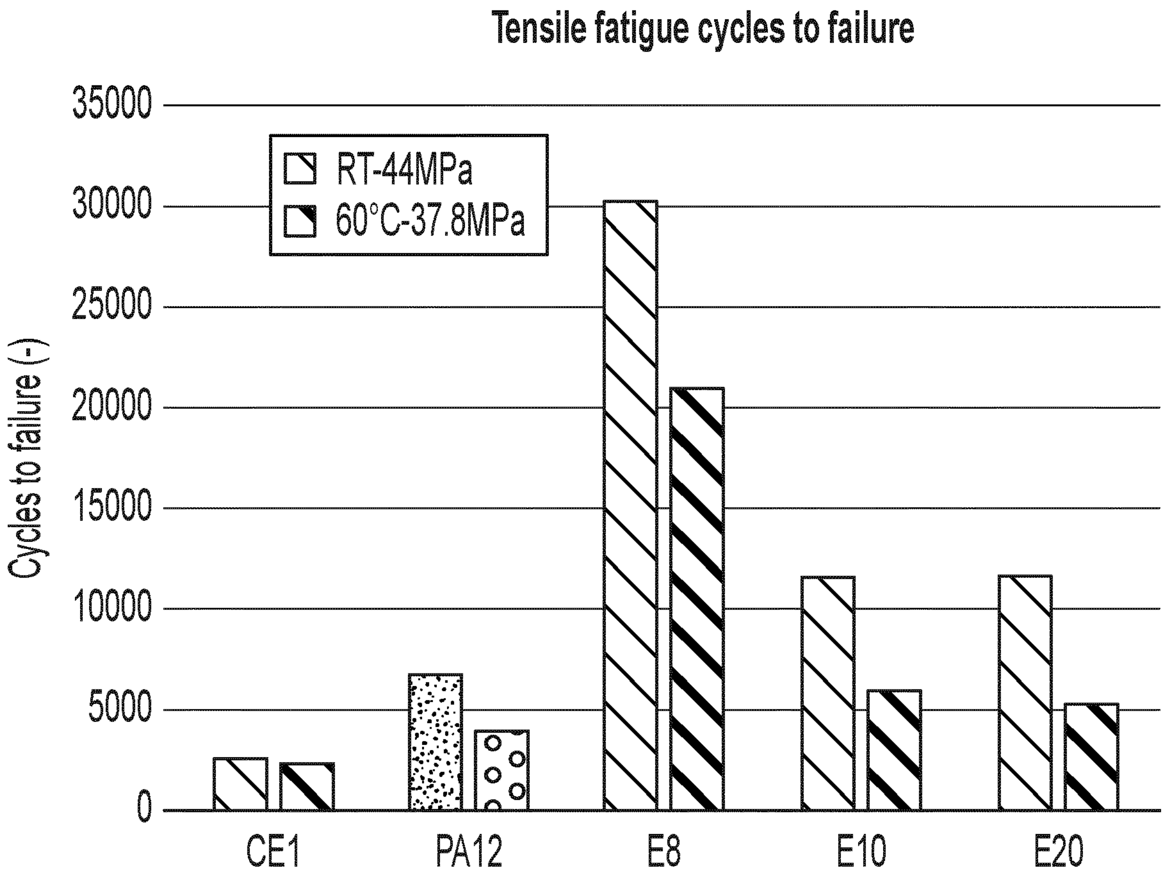
Tensile fatigue cycles to failure
35000
30000
25000
20000
15000
10000
5000
0
Cycles to failure (-)
RT-44MPa
60°C-37.8MPa
CE1
PA12
E8
E10
E20

FIG. 13

Europäisches Patentamt
European Patent Office
Office européen des brevets

# EUROPEAN SEARCH REPORT

Application Number
EP 23 21 8215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 988 530 B2 (LOTTE ADVANCED MAT CO LTD [KR]) 5 June 2018 (2018-06-05) | 1-15 | INV. C08G63/199 C08L83/10 |
| Y | * example 9; table 1 * | 1-15 | |
| | ----- | | |
| X | US 9 758 670 B2 (VAN ZYL ANDRIES J P [NL]; YANG JIAN [CN] ET AL.) 12 September 2017 (2017-09-12) | 1-15 | |
| Y | * table 17 - C141 * | 1-15 | |
| | ----- | | |
| Y | WO 2023/131909 A1 (SHPP GLOBAL TECH BV [NL]) 13 July 2023 (2023-07-13) * paragraph [0054]; claim 1; table 7 * | 1-15 | |
| | ----- | | |

TECHNICAL FIELDS SEARCHED (IPC)

C09J
C08G
C08L

The present search report has been drawn up for all claims

1

| Place of search | Date of completion of the search | Examiner |
|---|---|---|
| The Hague | 22 May 2024 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 21 8215

This annex lists the patent family members relating to the patent documents cited in the above-mentioned European search report. The members are as contained in the European Patent Office EDP file on
The European Patent Office is in no way liable for these particulars which are merely given for the purpose of information.

22-05-2024

| Patent document cited in search report | Publication date | Patent family member(s) | Publication date |
|---|---|---|---|
| US 9988530 B2 | 05-06-2018 | KR 20150127932 A | 18-11-2015 |
| | | US 2015322259 A1 | 12-11-2015 |
| US 9758670 B2 | 12-09-2017 | CN 104271668 A | 07-01-2015 |
| | | EP 2850134 A1 | 25-03-2015 |
| | | US 2015344687 A1 | 03-12-2015 |
| | | WO 2013170452 A1 | 21-11-2013 |
| WO 2023131909 A1 | 13-07-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1966310 A1
- KR 20170092143 A
- US 20070293608 A1
- US 7786246 B
- US 20030032725 A
- US 2465319 A
- US 3047539 A


### Non-patent literature cited in the description


- *CHEMICAL ABSTRACTS*, 80-05-7